# EUROPEAN PATENT SPECIFICATION

(11) **EP 2 034 666 B1**
(45) Date of publication and mention of the grant of the patent: **05.12.2012**
(21) Application number: 07721775.0
(22) Date of filing: 21.06.2007
(51) Int. Cl.: H04L 29/12, H04L 29/06

(54) **METHOD AND SYSTEM FOR REALIZING MEDIA STREAM INTERACTION AND MEDIA GATEWAY CONTROLLER AND MEDIA GATEWAY**
VERFAHREN UND SYSTEM ZUM REALISIEREN VON MEDIENSTROM-WECHSELWIRKUNG UND MEDIEN-GATEWAY-STEUERUNG UND MEDIEN-GATEWAY
PROCÉDÉ ET SYSTÈME POUR RÉALISER UNE INTERACTION DE FLUX MULTIMÉDIA, CONTRÔLEUR DE PASSERELLE MULTIMÉDIA, ET PASSERELLE MULTIMÉDIA

(30) Priority: 22.06.2006 CN 200610090061; 21.07.2006 CN 200610099246
(43) Date of publication of application: 11.03.2009
(73) Proprietor: Huawei Technologies Co., Ltd., Shenzhen, Guangdong Province 518129 (CN)
(72) Inventor: ZHU, Ning, Shenzhen, Guangdong Province 518129 (CN)
(74) Representative: Pfenning, Meinig & Partner GbR
(86) International application number: PCT/CN2007/070157
(87) International publication number: WO 2008/000188

(56) References cited:
- CN-A- 1 411 220
- CN-A- 1 474 566
- CN-A- 1 571 440
- US-A- 6 006 272
- US-A1- 2003 233 471
- STERMAN B ET AL: "NAT traversal in SIP" ANNUAL REVIEW OF COMMUNICATIONS, NATIONAL ENGINEERING CONSORTIUM, CHICAGO, IL, US, vol. 56, 1 January 2002 (2002-01-01), pages 779-786, XP001520174 ISSN: 0886-229X

## Description

### Field of the Invention

The present invention relates to the field of communication technologies, and in particular, to a method and system for implementing media stream interaction, a media gateway controller (MGC) and a media gateway (MG).

### Background of the Invention

The Next Generation Network (NGN) is a milestone in the history of telecommunications, emblematizing the advent of a new generation telecommunication network. The NGN is a combination of a voice network based on Time Division Multiplex (TDM) such as a Public Switched Telephone Network (PSTN) and a packet network based on the Internet Protocol/Asynchronous Transfer Mode (IP/ATM), thereby enabling an integrated service of voice, video, data, etc., over the new generation network.

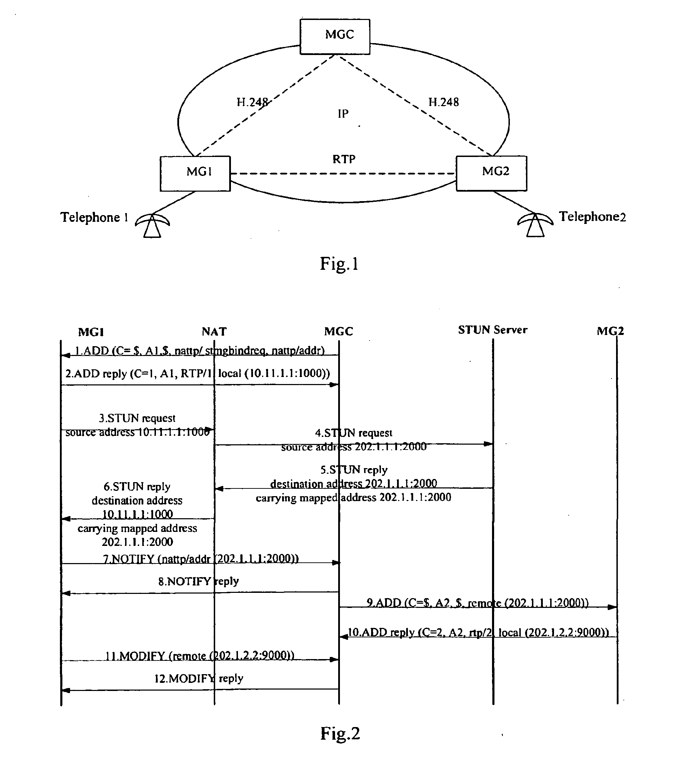

Reference is made to Figure 1 which is a schematic diagram illustrating the structure of an existing network. A Media Gateway (MGW, also abbreviated as MG) is used to convert E1 time slots in a circuit switched domain into Real-time Transport Protocol (RTP) media streams in an IP network. A Media Gateway Controller (MGC) is used to implement management of call status and control of resources born on the MG. Control signaling is transmitted between the MGC and MG in order for the MG to implement establishment, modification, release and resource management of a specific media stream.

Referring to Figure 1, if MG1 and MG2 are located in the same private bearer network or the same public bearer network, an IP packet from either one of MG1 and MG2 can reach the other directly. If one of MG1 and MG2 is located in a public network and the other in a private network, or the two are located in two different private networks, an IP packet from one of which cannot reach the other directly, it is possible that a media stream can be transmitted in only one direction or neither direction. The same applies in the case that a media gateway is located at one side of a media stream, and a Session Initiation Protocol (SIP) terminal, an H323 terminal, another Circuit Switched (CS) domain or packet network, etc., is located at the other side.

To implement transmission of an IP packet between a public network and a private network, Network Address and optional Port Translation (NA(P)T) is a relatively basic technology. Network Address Translator (NAT) is a standard method used to map an address domain (for example, a dedicated intranet) to another address domain (for example, the Internet). NAT allows a terminal in an organization-dedicated intranet (i.e. a private network) to be connected transparently to a terminal in a public domain (i.e. a public network), without needing that a terminal in the private network have a registered Internet address (which becomes more and more scarce). On the basis of NAT, Network Address and Port Translation uses an address and a port number together as an item to be translated, thereby allowing multiple terminals in a private network to share a network IP address of a single public network.

There are four types of NAT, i.e. Full Cone, Restricted Cone, Port Restricted Cone and Symmetric. The common feature of the first three types, which are generally called Cone NAT, lies in that packets are translated to the same external address and port through NAT so long as the packets come from the same internal address and port. Symmetric NAT somewhat differs in that packets are translated to the same external address and port through NAT so long as the packets come from the same internal address and port and are directed to the same external address and port, and are translated to different addresses and ports through NAT by using different mappings if the packets come from the same internal address and port but are directed to different external addresses and ports. In Symmetric NAT, a packet can be sent from an external address to an internal address via an address mapped through NAT only when the external address has ever received a packet sent from the internal address, like in Port Restricted Cone NAT.

NAT traversal means that a terminal in a private network is connected via a private IP address to a public network through NAT or NAPT at an egress. It should be particularly noted that, NAT traversal is applicable to not only a NAT device but also a NAPT device. In voice and video applications based on H323, SIP, Media Gateway Control Protocol (MGCP), H248, and so on, destination addressing is implemented through IP addresses and ports in signaling messages. In NAT traversal, therefore, not only port information of the Transmission Control Protocol/User Datagram Protocol (TCP/UDP) layer and source and destination addresses of the IP layer but also relevant address information in the payload (i.e. signaling) of an IP packet, need to be translated.

STUN and TURN are two commonly used methods for NAT traversal.

STUN

A terminal in a private network obtains an external address at the egress Network Address Translator (NAT) through a certain mechanism in advance, and fills the external address at the egress NAT, instead of a private IP address of the private network, in address information to be filled in the payload (i.e. signaling) of an IP packet. Therefore, the contents of the payload (i.e. signaling) of the IP packet do not need to be modified when passing through the NAT. Instead, only an IP address in the header of the packet needs to be translated through a general NAT flow, so that the IP address information in the payload (i.e. signaling) of the IP packet is identical to the IP address information in the header of the packet. The STUN protocol deals with the translation of addresses of the application layer based on this idea.

STUN is an abbreviation of Simple traversal of User Datagram Protocol (UDP) Through Network Address Translators. An application program (STUN client) sends a STUN request message to a STUN server external to the NAT through UDP. Upon receiving the request message, the STUN server generates a response message carrying source port information carried in the request message, i.e. information of an external port at the NAT corresponding to the STUN client. The response message is sent to the STUN client through the NAT. The STUN client obtains the external address at its egress NAT from the contents of the body of the response message, and fills the address in the payload of UDP in a subsequent call, informing the peer that the RTP receiving address and port number of the local are address and port number external to the NAT. Because the NAT mapping entries for media streams are established in advance at the NAT through the STUN protocol, a media stream can traverse the NAT smoothly.

The most remarkable advantage of the STUN protocol lies in that existing NAT/FW (Firewall) devices do not need to be modified. In addition to the advantage that NAT/FW does not need to be modified when STUN is used, STUN can be used in a network environment in which multiple NATs are connected in series.

The limitation of STUN lies in that a terminal in a private network needs to support the function of STUN client, and does not support Symmetric NAT traversal which is usually implemented for an egress NAT in an enterprise intranet requiring high security.

TURN

TURN deals with NAT based on an idea similar to that for STUN. A Voice over IP (VOIP) terminal in a private network obtains a service address of a public network (note: the address obtained through STUN is an external address at the egress NAT, and the address obtained through TURN is an address of a public network at the TURN server) through a certain mechanism in advance, and fills the address of the public network in address information required in the payload (i.e. signaling) of an IP packet.

TURN is an abbreviation of Traversal Using Relay NAT. In the application model of TURN, the address and port of the TURN server is allocated as the external receiving address and port for the VOIP terminal in the private network. In other words, any packet sent from the terminal in the private network needs to be relayed by the TURN server. In addition to having the advantages of STUN, TURN solves the problem that a STUN application cannot traverse Symmetric NAT and similar Firewall devices, and also supports TCP-based applications. In addition, because the TURN server controls the allocation of addresses and ports, the TURN server can allocate a RTP/RTCP (RTP Control Protocol) address pair (the RTCP port number is the RTP port number plus one) as the receiving address for a terminal user in the private network, avoiding free allocation of RTP/RTCP port numbers at the egress NAT in STUN which prevents the client from receiving an RTCP packet sent from the peer (which sends an RTCP packet to a destination port, the number of which is the RTP port number plus one by default).

The limitation of TRUN lies in that a VOIP terminal needs to support the function of TRUN client, i.e. TRUN has certain requirements on network terminals, like STUN. In addition, media streams are relayed by the TURN server, which increases the possibility of packet delay and loss.

Another traversal method is RSIP, which is an abbreviation of Realm Specific IP and based on a similar principle to NAT. An RSIP gateway includes two or more address domains like NAT devices. When a terminal in a private network would communicate with a node external to its private network space, the terminal should register with the RSIP server (gateway) first. The RSIP gateway allocates a public address or a public IP address and port set shared with another terminal and binds it with the private address. The terminal uses this address to send data packets until the lease of the address expires or the address is released. The terminal uses the allocated public address and port directly in the payload of an IP packet, but should encapsulate the data packet to be sent that uses the public address into a data packet that uses a private address and send the data packet to the RSIP server. Any standard channel protocol such as ip-in-ip, gre or 12tp can be used in this process. Then, the RSIP server decapsulates the data packet and sends the data packet that uses the public address to the Internet. The advantage of RSIP lies in that no modification of the IP payload, for example, that of the port number, in RSIP, so that IP security (IPSEC) can be supported easily. Some extensions are made to the RSIP protocol, in which parameters such as Security Parameter Index (SPI) of IPSEC are added and combined with IP address information carried in an IP header for identification and lookup of RSIP tunnels, thereby implementing end-to-end IPSEC.

An existing method for implementing NAT traversal based on the H.248 protocol is described as follows.

In an H.248 message sent from a media gateway controller to a gateway 2 in a public network, the private network address of the peer of a media stream in a private network located after the NAT device is specified as CPE2 carried in a remote Session Description Protocol (SDP) description of an RTP endpoint RTP/2.

When a media stream sent from the peer (the address of which is CPE2) in the private network passes through the NAT, the NAT translates the address into the public network address CPE1. According to H.248 (i.e. CPE2 carried in the remote SDP description of RTP/2, as mentioned above), however, the endpoint RTP/2 will send the media stream to CPE2 which is a private network address actually unreachable for the endpoint RTP/2. Therefore, a newly added H.248 signal under H.248.37 is sent to the endpoint RTP/2 instructing it to traverse the NAT. The endpoint RTP/2 replaces the private network address CPE2 in the remote SDP description with the actually received public network address CPE1 for the media stream. The media stream from the endpoint RTP/2 is sent to CPE1, and the NAT sends the media stream received by CPE1 to the private network address CPE2 according to a pre-established address mapping.

The NAT traversing packet defined in H.248.37 requires that an endpoint in a private network first send a media stream to an IP endpoint in a public network to trigger the NAT device to generate an address mapping, and the endpoint in the public network take the received source address of the media stream as a destination address to send the media stream. In implementations, the inventor found that a unidirectional media stream may be needed in many cases, for example, when a ring back tone or color ring back tone needs to be played by the peer. In this case, before the called party answers, no media stream is sent from the calling party in a private network, which therefore cannot receive any media stream. In addition, when voice activity detection is activated and the subscriber in the private network is silent, no media stream is sent either from the private network to the public network or from the public network to the private network. That is to say, according to the specifications defined in H.248.37, the endpoint in the private network must send the media stream to the IP endpoint in the public network first. Otherwise, no interconnection of media streams can be implemented.

For the NAT traversal according to H.248.37, another problem lies in that connectivity must be ensured in at least one direction. If the two parties of a call are located in two different private networks, and the addresses are unreachable in both directions, the mechanism of H.248.37 may not work.

The mechanism of H.248.37 is not applicable when the device in a public network is not a media gateway and the peer is located in a private network, for example, when the device in the public network is a SIP terminal or H.323 terminal. SIP and H.323 do not support the functions similar to those of H.248.37.

The above description is made with reference to the example of H.248.37. For other protocols such as MGCP, similar problems exist.
US 2003/233471 A1 discloses a method of operating a media proxy in a public address realm of a communication network in order to establish a packet-based call between two entities.
"STERMAN B ET AL: 'NAT traversal in SIP' annual review of communications, national engineering consortium, CHICAGO, IL, US, vol. 56, 1 January 2002 (2002-01-01), pages 779∼786" discloses NAT traversal solution in SIP, and the mapping of NAT is valid for some pre-defined mapping interval after which, in the absence of network traffic between the two communicating parties, this mapping may be expunged.

### Summary of the Invention

Embodiments of the present invention provide a method according to claim 1 and system according to claim 13 for implementing media stream interaction, a media gateway controller according to claim 16 and a media gateway according to claim 18, thereby solving the problem that media streams can be transmitted in only one direction or neither direction when a media gateway in a private network exchanges media streams with a peer device in a public network or a private network in a different domain.

Some technical solutions according to the embodiments of the present invention are described as follows.

A method for implementing media stream interaction is provided, wherein media bearer networks in which the two sides of the media stream interaction are located being IP domains, wherein at least one of the IP domains is a private network, an address of which needs to be mapped by a network translating device, and the method includes:

acquiring, by a media gateway controller (MGC), which implements control of resources born on a media gateway (MG), a public network address corresponding to a local media address of the MG in a private network, the public network address being used as a public network address by a remote address of a peer of the MG; and

sending, by the MGC, the public network address to the peer so that the peer exchanges media streams with the MG in the private network according to the public network address.

A system for implementing media stream interaction is provided, wherein media bearer networks in which the two sides of the media stream interaction are located being IP domains, wherein at least one of the IP domains is a private network, an address of which needs to be mapped by a network translating device, and the system includes a media gateway controller (MGC), a media gateway (MG) in a private network and a peer that needs to exchange media streams with the MG in the private network, and wherein

the MGC includes:

a public network address acquiring unit, adapted to acquire a public network address corresponding to a local media address of the MG in the private network, and send the public network address to a public network address sending unit, the public network address being a public network address used as a remote address by the peer of the MG; and

a public network address sending unit, adapted to send the received public network address to the peer, and

the MG in the private network includes:

a public network address reporting unit, adapted to initiate, according to an instruction from the MGC to report the public network address, a traversal protocol message, obtain the public network address used as the remote address of the peer and report a list including the public network address to the MGC; or obtain the public network address directly from information stored in the public network address reporting unit itself and report the public network address to the MGC; wherein the MGC is capable of implementing control of resources born on the MG.

A media gateway controller includes a public network address acquiring unit and a public network address sending unit, wherein

the public network address acquiring unit is adapted to acquire a public network address corresponding to a local media address of a media gateway (MG) in a private network and send the public network address to the public network address sending unit, the public network address being a public network address used as a remote address by a peer of the MG; and

the public network address sending unit is adapted to send the received public network address to the peer; wherein the media gateway controller is capable of implementing control of resources born on the MG.

A media gateway includes:

a public network address reporting unit, adapted to initiate, according to an instruction from a media gateway controller (MGC) to report a public network address, a traversal protocol message, obtain a public network address used as a remote address by a peer and report a list including the public network address to the MGC; or obtain the public network address directly from information stored in the public network address reporting unit itself and report the public network address to the MGC; wherein the media gateway is configured to have its resources controled by the Mgc.

Compared with the prior art, according to the embodiments of the present invention, an MGC acquires a public network address associated with an MG in a private network through NA(P)T, RSIP, TURN, and so on, which is a public network address used as a remote address of a peer of the MG, and the MGC sends the public network address to the peer so that the peer exchanges media streams with the MG in the private network through the public network address. Therefore, the problem is solved that an endpoint in the private network must send a media stream to an IP endpoint in the public network first, and otherwise, no interconnection of media streams can be implemented. In other words, the limitation is eliminated that interconnection of media streams must be initiated by an endpoint in the private network, so that traversal of media streams in different IP domains is implemented at the media gateway, and a media stream can be initiated in either direction. Moreover, traversal can be implemented even when the two sides are located in different private networks.

Furthermore, according to the embodiments of the present invention, no network translating device needs to be updated, and no system overhead, caused by introducing a border gateway, is needed, and low overhead of existing systems is occupied according to the methods used. Therefore, the embodiments of the present invention are well compatible with the existing systems and save the system resources as much as possible.

### Brief Description of the Drawings

Figure 1 is schematic diagram illustrating the structure of a conventional network;

Figure 2 is a flow diagram illustrating address negotiation through STUN when the calling-side MG is located in a private network, according to an embodiment of the present invention;

Figure 3 is a flow diagram illustrating address negotiation through STUN when the called-side MG is located in a private network, according to an embodiment of the present invention;

Figure 4 is a flow diagram illustrating address negotiation through TURN when the calling-side MG is located in a private network, according to an embodiment of the present invention;

Figure 5 is a flow diagram illustrating address negotiation through TURN when the called-side MG is located in a private network, according to an embodiment of the present invention;

Figure 6 is a flow diagram illustrating address negotiation through STUN when the calling-side and called-side MGs each are located in a private network, according to an embodiment of the present invention; and

Figure 7 is a flow diagram illustrating a process that the STUN server sends to the MGC a reply in response to a STUN binding request message, according to an embodiment of the present invention.

### Detailed Description of the Embodiments

In the embodiments of the present invention, NAT traversal of a media stream of an MG is controlled by an MGC.

In the embodiments of the present invention, the media bearer networks in which the two terminals involved in media stream interaction are located belong to different IP domains, and an IP packet, i.e. media stream, to be transmitted needs to be relayed by one or more NAT devices.

In this specification, an IP domain that is located after a NA(P)T device and needs an address mapping by the NA(P)T device is defined as a private network domain (or a private domain), and a peer IP domain to which an address of the private network domain is mapped by one or more stages of NAT is defined as a public network domain (or a public domain). That is to say, the private network domain and the public network domain are defined with respect to the domains in which the two sides of NAT are located in the embodiments of the present invention.

A controlled MG in a private network can exchange media streams with a public network address only after NA(P)T or RSIP translation is implemented. A device at the peer side of media streams includes but is not limited to a SIP terminal, an H.323 terminal, an MG or another CS domain or packet network. For the purpose of illustrating the embodiments only, the peer hereinafter refers to a gateway, but is not so limited in practical applications, i.e. the peer may be a SIP terminal, an H.323 terminal, another CS domain or packet network, etc. For the gateway control protocol, the H.248 protocol or MGCP may be used through the same mechanism. Although the flow diagrams show that H.248 is used, MGCP may be used similarly through the same mechanism.

An implementation according to an embodiment of the present invention is described as follows. When the media bearer networks in which the two sides of media stream interaction are located belong to different IP domains and a first IP domain is a private network domain that needs an address translation by a network translating device, the MGC acquires a public network address corresponding to the local media address of the MG in the private network, the public network address is a public network address used as a remote address of the peer of the MG. The MGC sends the public network address to the peer, which exchanges media streams with the MG in the private network according to the public network address. Therefore, before an endpoint in the private network sends a media stream to the public network, the peer can be aware of the destination address and port of the media stream to be sent, i.e. the public network address sent by the MGC previously.

The MGC may acquire a public network address corresponding to the local media address of the MG in the private network through the following modes.

Mode 1: The MGC sends to the MG in the private network an instruction to report a public network address; the MG reports a public network address corresponding to the local media address of the MG itself and used as a remote address of the peer, according to the received instruction; and the MGC obtains the public network address from the received reported information. Alternatively, the MG may report the private network address of the MG itself upon receiving from the MGC the instruction to report an address. In this case, the MGC may obtain the private network address of the MG from the received reported information for later use.

Mode 2: Upon receiving from the MGC an instruction to implement traversal with a destination address for replying being the MGC, the MG initiates a traversal protocol message which contains information specifying that the reply message should be sent to the MGC; and the MGC obtains the public network address from the received reply to the traversal protocol message.

Mode 3: The MG initiates, on its own initiative, a traversal protocol message which contains information specifying that the reply message should be sent to the MGC; and the MGC obtains the public network address from the received reply to the traversal protocol message.

Mode 4: The MG initiates, on its own initiative, a traversal protocol message and reports a public network address used as a remote address of the peer and obtained from the reply; and the MGC obtains the public network address from the received reported information.

The above four modes will be described in further detail later with reference to a specific H.248/MGCP packet extension and SDP extension.

In addition, if there are multiple media streams between the two sides, in which multiple addresses plus ports at a gateway in the private network are involved, and/or the media streams sent from the same address plus port in the private network are directed to different destination addresses, the above mechanisms need to be implemented multiple times so that NAT traversal can be implemented for each of the media streams.

The methods for traversal include but are not limited to STUN, TURN, RSIP, and so on.

When STUN is used for traversal, the public network address used as the remote address of the peer address is an address at the public-network side of NAT, to which the local media address of the MG in the private network is mapped. When TURN is used for traversal, the public network address used as the remote address of the peer address is a public network address that the TURN server allocates for the current request. When RSIP is used for traversal, the public network address used as the remote address of the peer address is a public network address that the RSIP server (gateway) allocates for it.

The instruction sent from the MGC to the MG to report a public network address may be sent through a signal, an attribute, an event, a signal parameter, an event parameter, or a way described in a local SDP description.

The following description is made with reference to an example of an extended H.248 packet, such as an extended nattp packet defined below.

The extended H.248 packet includes the following.

1. Attribute stmgbindreq

This attribute is used to describe the method for NAT traversal.

A value of "STUNSHARE" indicates that the gateway is required to implement STUN traversal with SHARED-SECRET, "STUNNOSHARE" indicates STUN traversal with a binding request being sent directly without SHARED-SECRET, "TURN" indicates TURN traversal, "RSIP" indicates RSIP traversal, and "NONAT" indicates that no NAT traversal is needed and a local media address allocated for the MG in the private network is used. Taking into account a combination of a current value of the attribute and whether it is required in an H.248/MGCP request message that a reply message carry a local SDP description, whether the private network address allocated for the gateway carried in the reply message is a set value of the mapped public network address or a default value, and whether a report event is configured, the gateway may determines whether the corresponding public network address and/or private network address needs to be reported and how to report. The reported public network address may be an address already obtained through STUN, etc., before requesting reporting of the public network address and stored locally.

This attribute may be in the form of a list in which multiple methods for traversal are described.

2. Attribute traAttr

This parameter further describes other attributes for traversal. Absence of the parameter indicates that the MG uses a default configuration. This attribute specifies a local private network address, the type and address of a corresponding server, specific traversal parameters (for example, the above-described STUNSHARE, STUNNOSHARE, TURN and LOCAL ADDRESS) and a part of or all priorities. Multiple different STUN servers, TURN servers or other servers may be specified for the same private network address, which indicates that the mapped public network address may be obtained for the private network address through various ways. Such a scenario is described in Interactive Connectivity Establishment (ICE) defined by the Internet Engineering Task Force (IETF).

This attribute may be in the form of a list in which multiple attributes for traversal are described.

In fact, this attribute can implement the function of the attribute stmgbindreq, but is more powerful and thus applicable to more complex applications.

3. Attribute Nattype

This parameter describes the type of the egress NAT of the private network in which the MG is located, including Full Cone, Restricted Cone, Port Restricted Cone and Symmetric. This parameter may also describe the address of the NAT. This parameter is used for reference when the MG selects the type of traversal by itself. Absence of the parameter indicates that the gateway does not need the parameter, or a default configuration at the MG should be used. If multiple NATs in the private network domain in which the gateway is located are connected to one or more other domains, the types of the multiple NATs and/or their respective IP addresses need to be described by this parameter in combination with the attribute traAttr.

4. Attribute SDPReply

This attribute is of a switch type, used to set whether the MG should report a public network address through a local SDP description in an H.248/MGCP signaling message when replying to a current message. If the attribute specifies that the MG should report a public network address in a local SDP description in a reply message and the gateway should report the local SDP description in a request message, upon receiving the message, the gateway does not reply to the message first, but sends an SUTN request message or the like according to the instruction, and uses the obtained public network address directly as a local address in the local SDP description. Because it takes some time for the STUN message interaction, and takes even more time if multiple address mappings are involved, the MG may send a pending message to make the MGC wait for a reply.

If it is a default option that the MG reports a public network address in a local SDP description in a reply message, and this is the only way used, the attribute may be omitted.

5. Attribute MGSTUNServer

This attribute is used to set whether the peer MG should be used as a STUN server. If the switch value is ON, the gateway sends a STUN request according to a remote address described through SDP in a remote descriptor. This is advantageous in that the paths for a media stream and a reply to the STUN request are completely the same, and all kinds ofNATs can be traversed. The disadvantage lies in that the peer device should have the function of a STUN server. Because the header of a STUN packet can be distinguished from an RTP packet or the like, the peer device can identify and process correctly the STUN packet.

This attribute is used to specify in a unified way whether the peers of respective media streams described in a remote descriptor should be used as the addresses of STUN servers for the local media addresses. Alternatively, this attribute may be defined in the form of a list to set whether the peer of a respective media stream described in a remote descriptor should be used as the address of a STUN server for each of the local media addresses, respectively.

The above attributes may be used as attributes of an endpoint or attributes of a gateway level (ROOT). The MGC may acquire the values of these attributes through audit. In view of the flexibility of H.248/MGCP, an event, a signal, an event parameter and a signal parameter may also be used for the same purpose through a similar mechanism to an H.248 attribute, and descriptions thereof are omitted here.

In addition, the attribute stmgbindreq does not necessarily directly trigger the gateway to send a STUN NAT traversal message or the like. The MG may determine whether a STUN NAT traversal message or the like needs to be sent to acquire a public network address, according to the current values of the attributes, whether it is specified in an H.248/MGCP request message that a local SDP description should be reported in the reply, and so on. For example, if the MG is required to report a local SDP description, the MG determines whether a private network address or a public network address obtained through STUN or the like is needed by the MGC currently, according to the value of the attribute stmgbindreq, and reports an address as needed in the local SDP description in the reply message. If a public network address is needed, the gateway may select to report a public network address stored previously without sending a STUN NAT traversal message or the like again.

If the gateway finds that the attribute stmgbindreq is changed, the MGC needs a new local address which may be reported by the MG through an event.

Another case exists in which the gateway may determine by itself whether a STUN NAT traversal message or the like needs to be sent to acquire a public network address, simply according to its own configuration or logic. For example, the MG, by default, sends a STUN NAT traversal message or the like to acquire a public network address which is reported in a local SDP description, so long as the MG finds the MG itself is located after the NA(P)T. The private network address of the RTP endpoint may be reported in the SDP description along with the public network address, so that the MGC may select to use the private network address or the public network address.

If the two sides each are located in a private network and can exchange media streams through a private network address, they may exchange media streams after obtaining a mapped public network address through a method according to an embodiment of the present invention.

If the gateway fails to obtain all the public network addresses, the gateway sends an error code to the MGC in reply.

6. Signal stmgcbindreq

The MGC sends this signal to the gateway, instructing the gateway to send a STUN request. In this STUN binding request message, it is specified through an attribute RESPONSE-ADDRESS that the reply should be returned to an address designated by the MGC, so that the MGC may obtain a public network address mapped through NA(P)T.

The signal carries the following parameters.

(1) STUNAddr

This parameter describes the address of a STUN server, the format of which is an address plus a port, for example, "202.1.1.2:1000". In absence of the parameter, the gateway selects to use a STUN server configured by default.

(2) PrivateAddr

This parameter describes the source address of a STUN message, which is a private network address. Because multiple local addresses may be determined through negotiation between call media, it needs to specify an address from which the STUN message is sent. STUN binding messages sent from different addresses have different STUN transaction numbers, so that the MGC may distinguish among the private network addresses to which the public network addresses carried in multiple STUN messages sent by the STUN server in reply are mapped, according to the STUN transaction numbers in the STUN reply messages. The format of the parameter is an address plus a port, for example, "192.168.1.2:2000".

It should be noted that, in the case that no address has been allocated for an added IP endpoint, other ways may be used to achieve the same effects. For example, address numbering may be used to number the addresses in a local SDP description in the request message, in a format <X,Y> for example, in which X represents a group number and Y represents a sequence number of an address in the group. For example, <2,1> represents the first address in the second group in a local SDP description. Different numbers correspond to different STUN transaction numbers so that the MGC may obtain a correspondence relationship between public network addresses and private network addresses from the multiple STUN reply messages as obtained.

The purpose of this parameter may be achieved through other ways, descriptions of which are omitted here.

(3) Brmess

This parameter is a STUN request message constructed for the MG by the MGC. The MG sends this message from an address specified by PrivateAddr to the STUN specified by STUNAddr. The REPONSE-ADDRESS attribute of the request message is directed to the MGC. The MGC can obtain a public network address to which the MG is mapped through NAT, from the received STUN reply message.

Before sending a stmgcbindreq signal, the MGC may send a Shared Secret request to the STUN server to acquire a user name. If the MGC itself is located in a private network, the MGC may send a binding request to the TURN server to acquire an IP address and port allocated for the MGC through NAT. The address and port may be arranged in the REPONSE-ADDRESS attribute of the STUN message carried in the parameter Brmess. A STUN transaction number allocated by the MGC may also be sent to the MG in this parameter. For different binding requests, the STUN transaction numbers are different.

If there are multiple addresses in a private network for which public network addresses need to be obtained during a call, a stmgcbindreq signal may be sent multiple times, or the stmgcbindreq signal may be redefined, or a new signal may be defined, instructing the MG to send multiple STUN binding requests in a single signal in the form of a list. Upon receiving all the replies, the MGC obtains all the public network addresses to which the private network addresses are mapped through NAT/TURN for the call.

Another case exists in which the MG, by default, sends a STUN message and specifies that the reply message should be sent to the MGC, so long as the MG finds the MG itself is located after the NA(P)T, and the MGC obtains the public network address mapped through the NA(P)T from the reply message. In other words, no stmgcbindreq signal is needed and the MG itself can implement this function.

In view of the flexibility of H.248/MGCP, an attribute, an event parameter, and so on may also be used for the same purpose of this signal, and descriptions thereof are omitted here.

7. Event reportaddr

This event may be used by the MG to report a public network address obtained through STUN, TURN, RSIP or another protocol. The information reported through the event by the MG may include only a public network address used as a remote address of the peer, may further include a local media address of the MG in the private network and a public network address used as a remote address of the peer, to which the local media address is mapped, or may further include a local media address of the MG in the private network, a corresponding media attribute and a public network address used as a remote address of the peer, to which the local media address is mapped. This event may also be used to report the local media address of the MG when no NAT traversal is required. If the gateway fails to obtain the public network address, the gateway may also send an error code to the MGC through this event.

Here, the media address includes the IP address of the local media, or includes the IP address and port number of the local media, and the public network address includes the IP address of the public network, or includes the IP address and port number of the public network. The descriptions thereof are similar.

No parameter is carried when the MGC sends the event. The event reported by the MG in the private network includes the following parameters.

(1) Error information: err

If no public network address used as a remote address of the peer can be obtained through TURN/STUN/RSIP, this parameter returns a reason for the error.

(2) Address: addr

This parameter is used to report only one group of IP addresses or one group of IP addresses plus ports. The contents of the parameter are in the form of an IP addresses plus a port, for example, "202.1.1.2:2000".

(3) Address list: addrlist

If multiple private network addresses need to be mapped, and some of them are the same and some of them are different, or even among the corresponding destination addresses, some are the same and some are different, the address list may be in the form of private network addresses and corresponding public network addresses, for example,
"192.168.1.1:1000 202.1.1.1:3000
192.168.1.2:2000 202.1.1.1:4000".

The above example indicates that the private network address 192.168.1.1:1000 is mapped to the public network address 202.1.1.1:3000, and the private network address 192.168.1.2:2000 is mapped to the public network address 202.1.1.1:4000.

If the same private network addresses are mapped to different public network addresses due to different destination addresses, the address list may be in the form of private network addresses plus destination addresses and corresponding public network addresses, for example,
"192.168.1.1:1000 202.9.1.1:1100 202.1.1.1:3000
192.168.1.1:1000 202.9.1.1:1200 202.1.1.1:4000".

This example indicates that the private network address 192.168.1.1:1000 with the address of the peer of media stream 202.9.1.1:1100 is mapped to the address 202.1.1.1:3000 through NAT, and the private network address 192.168.1.1:1000 with the address of the peer of media stream 202.9.1.1:1200 is mapped to the address 202.1.1.1:4000 through NAT.

Another way to identify a private network address is the format <X,Y> described hereinbefore, in which a group number and a sequence number in the group are used to identify which private network address corresponds to the mapped public network address.

Multiple mapped addresses obtained from the same private network address through different STUN/TURN devices may be all reported for the MGC to select one of them, or all sent to the peer.

An SDP string may also be used to report a public network address. The contents of this parameter are the same as those of a mapped local SDP description, for example,
"v=0
c=IN IP4 202.1.1.1
m=audio 10000 RTP/AVP 0 4
v=0
c=IN IP4 202.1.1.2
m=audio 20000 RTP/AVP 0 18".

The above SDP description is explained as follows.

The type of audio used by the media is IP V4, and the media are borne through RTP (defined by RFC3551).

The media are divided into two groups:

the address of the first group is 202.1.1.1, the port is 10000, and the codec used is G.711 and G.723; and

the address of the second group is 202.1.1.2, the port is 20000, and the codec used is G.711 and G.729.

18 indicates the payload type of G.729 for audio;

0 indicates the payload type of PCMU for audio; and

4 indicates the payload type of G.723 for audio.

It can be understood that a scenario in which only one entry is include in the above address mapping list addrlist, falls into that described in above (2). Dividing the description into (2) and (3) are merely for the purpose of illustration.

If a mapped public network address is carried in an SDP description in a reply message from the gateway, the format of a local SDP description under H.248/MGCP is as the above example of SDP description and the public network address is carried in the local SDP description.

The MGC may send the obtained SDP description in a remote descriptor directly to the peer without modification.

Also, the MG in the private network may report a list of public network addresses through an extended H.248 attribute in a reply message.

For reporting through an extended H.248 event, an SDP description may be reported as a parameter in the event, or what is to be reported may be arranged in a parameter of the event in a format described above to report. For reporting in a reply message through an extended H.248 attribute, an SDP description may be reported as a value of the attribute, or what is to be reported may be arranged in the attribute in a format described above to report.

A public network address may be reported in other non-SDP formats, descriptions of which are omitted here.

If the attribute stmgbindreq sent from the MGC is modified to indicate that no NAT traversal is required, and it is previously indicated, before the modification, that NAT traversal is required, and this event is valid, a media private network address of the MG is reported in the event.

Reporting through an event and reporting through a local SDP description in an H.248/MGCP reply message from the MG can achieve the same effects, and may be selected in practical applications to use only one of them. An extended packet may also be defined through only one of the two mechanisms.

8. Attribute mapaddrlist

If the peer device is also an MG, and the gateway or another device located after the MA(P)T has reported multiple mapped public network addresses for a single private network address, this attribute is used to send the multiple mapped public network addresses. Each entry in the list is described as

<list position>:<address:port>

for example, "1,202.10.1.1:1000" and "1,202.11.1.1:1000".

The way of numbering the addresses in an SDP description is described later.

These two strings indicate that the public network addresses to which a private network address is mapped include "202.10.1.1:1000" and "202.11.1.1:1000", the address position of the private network address being 1 in the SDP description.

An extended SDP description can implement most of the functions of an extended H.248 packet described above, and is more favorable to description of a more complex application.

For example,
"v=0
c=IN IP4 $
m=audio $ RTP/AVP 0
a=natt 1.0 stun 202.1.1.9:1000
a=natt 0.9 stun 202.1.2.9:1000
a=natt 0.9 turn 202.1.1.8:2000"
a=nattrelpy:yes

This SDP description is explained as follows.

The type of audio used by the media is IP V4, and the media are borne through RTP (defined by RFC3551). The codec used is PCMU.

An extended attribute "natt" indicates traversal may be implemented through STUN, the priority is 1.0, and the address of a STUN server is 202.1.1.9:1000. Traversal may be implemented through another STUN server, the address of the STUN server is 202.1.2.9:1000, and the priority is 0.9. Traversal may be implemented through TURN, the priority is 0.9, and the address of a TURN server is 202.1.1.8:2000. "a=nattreply:yes" indicates that a public network address obtained through STUN or TURN should be carried in an SDP description in an H.248/MGCP reply message.

An SDP description may simply indicate that NAT traversal is required instead of specifying a specific address of a STUN/TURN server. The gateway may obtain an address and port of a STUN/TURN server by inquiring an address resolution server (a Domain Name Server, DNS).

The type of NAT may be described through an SDP description, for example, ""a=NATType:fullcone" indicating full cone NAT.

Because STUN/TRUN/RSIP request and reply are transmitted between the local and a STUN/TRUN/RSIP server and the messages do not reach the peer of a media stream, the gateway may report multiple public network addresses obtained through different methods for the same media stream and the MGC informs the peer of the multiple public network addresses. The two sides may detect the multiple public network addresses (for example, a handshake message is sent to the peer to wait for a reply and receipt of a reply indicates that both sides are reachable). A public network address with which the local can communicate bi-directionally and which has a highest priority or is selected preferentially in the default configuration of the gateway.

In order for the gateway to report or send multiple public network addresses for the same private network address, SDP also needs to be extended.

For example,
"v=0
c=IN IP4 10.1.1.1
m=audio 1000 RTP/AVP 0 18
a=nattcd 0 1.0 202.1.1.9:8000
a=nattcd 0 0.9 202.1.1.8:9000
a=nattcd 18 1.0 202.1.1.8:1000".

This SDP description is explained as follows.

The type of audio used by the media is IP V4, and the media are borne through RTP (defined by RFC3551). The codec used is PCMU.

Three public network addresses obtained through an extended attribute "nattcd" are "202.1.1.9:8000" and "202.1.1.8:9000" for PCMU (the payload type is 0) and "202.1.1.8:1000" for G.729 (the payload type is 18). The priorities are 1.0, 0.9 and 1.0, respectively. This SDP description may be arranged in a LOCAL SDP description in an H.248/MGCP reply message or in a parameter addrlist of an event nattp/reportaddr. The MGC may send the SDP description as a remote SDP description to the peer, or select a part thereof to the peer. In this extension, if no payload type is specified or all payload types are specified, it is indicated that the public network address carried in this line is applicable to all the codec types in this group. In one word, if an address is applicable to multiple codec types and, for different codec types, the corresponding peer addresses are different, and the address may be mapped to different public network addresses at a symmetric NAT. Therefore, corresponding public network addresses may need to be specified for the different codec types. The MG may select one from multiple public network addresses corresponding to the same private network address for which the two sides have the same address, to transmit a media stream.

In general, the gateway reports only one corresponding public network address for each private network address. Especially when the addresses of the peers are identical and the type of NAT is cone, one corresponding public network address is generally enough.

This format may also be applicable to a scenario in which both public network address and private network address are reported. For example, before determining whether the peer is located in a public network or the same private network as the local, the gateway reports both public network address and private network address, and selection is made subsequently as to using the public network address or the private network address according to the actual situation of the peer.

The MG in the private network sending a STUN/TRUN/RSIP request must has the function of a STUN/TRUN/RSIP client. The STUN/TRUN/RSIP server is disposed in the public network. Considering RSIP is similar to NA(P)T, only STUN and TURN are described below for example.

In the case of a Full Cone NAT, after the independent STUN server replies to a message, an address mapping (X1:X2, Y1:Y2) is generated at the NAT, in which X1 is an IP address of the private network, X2 is a port of the private network, Y 1 is an IP address of the public network, and Y2 is a port of the public network. Then, for any address of a gateway in the public network, the private network address and port pair (X1:X2) in the address mapping may be accessed through the public network address and port pair (Y1:Y2) in the address mapping. In the case of a Port Restricted Cone NAT, before a media stream reaches a gateway in the public network from the private network, an endpoint for which the addresses of a gateway in the public network and the STUN server are identical (the ports are allowed to be different) may access (X1:X2) through (Y1:Y2). In the case of a Restricted Cone NAT and a Symmetric NAT, a gateway in the public network cannot access (X1:X2) through (Y1:Y2).

The TURN server can forward a media stream by itself, and thus can support all the four NAT types.

If the gateway in the public network also has the function of a STUN server, the transmission paths for a STUN message and a media stream are identical. In the case of different types of NATs, a media stream can therefore pass through, so long as a STUN message can pass through. In a call flow, a STUN request is sent from a private network port to the port used by an endpoint in the public network only when the address and port used by the endpoint are obtained. The attribute traAttr may specify the address of the STUN server as the local address for a media stream of the peer side. Because a STUN packet begins with 0B00, which is different from an RTP packet, the MG may distinguish between a STUN packet and an RTP packet. In this case, a new H.248/MGCP packet may be defined, in which an attribute or signal may be defined to indicate whether the gateway is used as a STUN server.

Whether an address in a remote SDP description is taken as an address of the STUN server may also be described in an SDP description, for example, "a=MGAsSTUNSrv:yes" indicating that an address in a remote SDP description is taken as an address of the STUN server.

Before using a newly extended packet, the MGC may inquire through audit about whether the gateway supports a packet extended according to the present invention.

It should be also noted that NAT traversal mentioned in the embodiments of the present invention in general includes both NAT traversal and NAPT traversal, which are termed collectively as NAT conventionally in the art. Therefore, if a NAT device is traversed, a public network address mentioned in the embodiments of the present invention includes only an IP address, and if a NAPT device is traversed, a public network address mentioned in the embodiments of the present invention includes an IP address and a port number. Moreover, because a large amount of IP addresses need to be occupied in the case of NAT traversal, NAPT traversal is used in general. However, according to the above conventional terminology, both of them are termed collectively as NAT traversal, NAT translation and the like no matter which is actually used. In addition, in the embodiments of the present invention, traversal implemented through RSIP is also regarded as NAT traversal. Therefore, the network translating device described hereinbefore may be not only a NAT device and a NAPT device, but also an RSIP device.

In addition, considering a NAT type, address and NAT binding lifetime for the private network in which the gateway is located may be configured on the MG, an H.248/MGCP packet may be extended so that the MGC obtains the NAT type, address and NAT binding lifetime used by the MG through audit or event reporting. The NAT type, address and NAT binding lifetime used by the gateway may be informed to the gateway through an attribute, a signal or the like. The address translation map in a NA(P)T device may have a certain lifetime and may need to be deleted when the lifetime expires. STUN also provides a mechanism for a STUN client to detect a NA(P)T lifetime, so that the STUN client determines a refreshing frequency. In this case, a new signal or the like may be added to instruct the gateway to acquire the NA(P)T lifetime.

Obtaining through an attribute a public network address to which a local private network address is mapped by a NA(P)T or a TURN server has been described hereinbefore. A specific example thereof is given below.

Addresses in a local SDP description for a request message are numbered in the form of, for example, <N,X,Y>, in which N represents a sequence number, X represents a group number and Y represents a sequence number of an address in the group. For example, <2,2,1> indicates that the address having a sequence number of 2 is the first address in the second group in the local SDP description. Therefore, each address in a local SDP description has a unique sequence number.

In the case of STUN, an attribute stunaddr is defined. The type of the attribute is string list. In a request message sent from the MGC to the MG, each entry in the list may take the following values:

L: "Local Address", indicating that a local address is needed;

B: "Binding request", indicating that a STUN binding request needs to be sent to acquire a mapped address; and

S: "Shared Secret /Binding Request", indicating that a Shared Secret STUN message needs to be sent first and then a STUN binding request needs to be sent to acquire a mapped address.

Each entry in the string list corresponds to a unique sequence number of a local private network address described above, and namely, indicates what operation should be performed for the private network address having the sequence number.

In a reply message from the MG, a mapped address indicated at a corresponding position in the string list of the attribute stunaddr and obtained in the way indicated at a position in the request, is returned, or an error code is returned. If the attribute in a request message takes a value of L, a null string is presented at the corresponding position in the reply message.

In the case of a Symmetric NAT, if a private network address corresponds to different peer addresses, the private network address is mapped to different public network addresses on the NAT. In the case of STUN, in which peer addresses are different because the address of the STUN server is used as an address in a remote SDP description, a private network address (used for multiple codec types, for example, "m=audio 1000 RTP/AVP 0 18") may correspond to multiple mapped addresses. In this case, therefore, the attribute stunaddr also needs to indicate sequence numbers of the codec types corresponding to a private network address having a certain number. For example, a string "1,2,B" indicates that a private network address having a sequence number of 1 corresponds to a private network address corresponding to the second payload type (i.e. codec type) in the corresponding "m=" line and a mapped public network address should be acquired by sending a binding request. A string "1,2,202.1.1.1:1000" in the string list in the returned reply message indicates that the public network address corresponding to the payload type during media stream interaction is "202.1.1.1:1000".

In the case of TURN, an attribute turnaddr is defined. The type of the attribute is string list. In a request message sent from the MGC to the MG, each entry in the list may take the following values:

L: "Local Address", indicating that a local address is needed; and

A: "Allocate Request", indicating that a TURN allocate request needs to be sent to acquire a mapped address from the TURN server.

Each entry in the string list corresponds to a unique sequence number of a local private network address described above, and namely, indicates what operation should be performed for the private network address having the sequence number.

In a reply message from the MG, a mapped address obtained in the way indicated at a position in the request is returned, being indicated at a corresponding position in the string list of the attribute turnaddr, or an error code is returned. If the attribute in a request message takes a value of L, a null string is presented at the corresponding position in the reply message. Because different mapped addresses may be obtained through different TURN servers, a sequence number of a local private network address needs to be carried in the reply message.

For example, "1,202.1.1.1:1000", "1,202.1.1.2:1000" and "2,202.1.1.3:3000" indicate that two mapped addresses are obtained through two TURN servers for a local private network address having a sequence number of 1.

The contents of the attribute stunaddr and the attribute turnaddr in a reply message from the MG may be sent by the MGC through an attribute in a request message directed to the peer of a media stream to inform the peer of a part of or all the mapped public network addresses, if the peer is also a gateway. The MGC may make a selection first so as to send only one mapped public network address for each local address to the peer through an attribute or an SDP description.

A binding lifetime may be carried in a STUN/TURN reply message. In addition, RFC3489 also defines a method for a STUN client to detect a NAT binding lifetime, in which the MGC may request through a signal or the like the MG in the private network to detect a NAT binding lifetime, or the MGC may request through an attribute or the like the MG to report a NAT binding lifetime.

The ICE draft (draft-ietf-mmusic-ice-09:txt) by the IETF defines Connectivity Checks for STUN, i.e. checking whether a media channel is connective through a STUN binding request. Connectivity Checks also ensure that corresponding NAT binding is active. As described hereinbefore, headers of a STUN message and an RTP message are different and therefore these two types of messages are readily distinguishable for processing. The MGC may send a signal or the like instructing the gateway to send a STUN Connectivity Checks packet. According to the protocol, specifically, the source address may be designated as local, reflexive or relayed, indicating that the source address is a local address, a local address for a NAT mapped address obtained through STUN, or a local address for generating a relayed (equivalent to allocated through TURN) mapped address.

The MGC may also instruct the gateway to send a STUN/TURN message such as a TURN send Indication message, a Set Active Destination request, a Connect Status Indication message, an Open Binding request and a Close Binding request, and to collect and report information contained in a reply message to the MGC, so that the MGC fully controls a STUN/TURN process for the MG.

An RTP Control Protocol (RTCP) packet generally uses an address identical to that used by a controlled RTP stream, but a port number equal to that used by the controlled RTP stream plus 1. Both sides of the media stream follow this rule. However, public network IP address and port to which address and port for RTP and RTCP are mapped through NAT mapping may not follow this rule, as a result of which the gateway in the private network may not receive an RTCP packet.

To solve this problem, address and port for RTCP may be reported by obtaining a mapped public address through STUN, TURN or the like according to the methods described above.

The MGC may instruct the gateway to acquire an address to which an RTCP address is mapped, for example, through a stunaddr attribute described above. In this case, if an RTCP address needs to be mapped, a string like "2,C,B" is used in a request message, indicating that a mapped public network address needs to be obtained for an RTCP address corresponding to a private network address having a sequence number of 2 through a binding request. In a reply message, "2,C,202.1.1.1:1001" in the string list indicates that the public network address to which the RTCP address corresponding to the private network address having a sequence number of 2 is mapped through NAT is "202.1.1.1:1001".

How to carry an RTCP port number is described in RFC3605.

In addition, the MGC may also instruct the gateway to acquire an address to which an RTCP address is mapped through a local SDP description sent to the MG. For example, "a=natt 1.0 rtcp stun 10.11.1.1:2000 202.1.1.9:1000" added in an SDP description indicates that a request needs to be sent from the source address of the RTCP packet "10.11.1.1:2000" to a STUN server "202.1.1.9:1000" to acquire a mapped public network address, and the priority is 1.0. The mapped RTCP public network address may be carried in a local SDP description in a reply message.

An RTP stream for RFC2833 or RFC2198, an RTP stream having a payload type of Comfortable Noise (CN) or the like, and a media stream of UDP Transport Layer (UDPTL) type, TCP type or the like may be all classified into a media stream, for which NAT traversal can be implemented through the methods according to the present invention.

Detailed descriptions are given below in conjunction with specific flows based on the H.248 protocol.

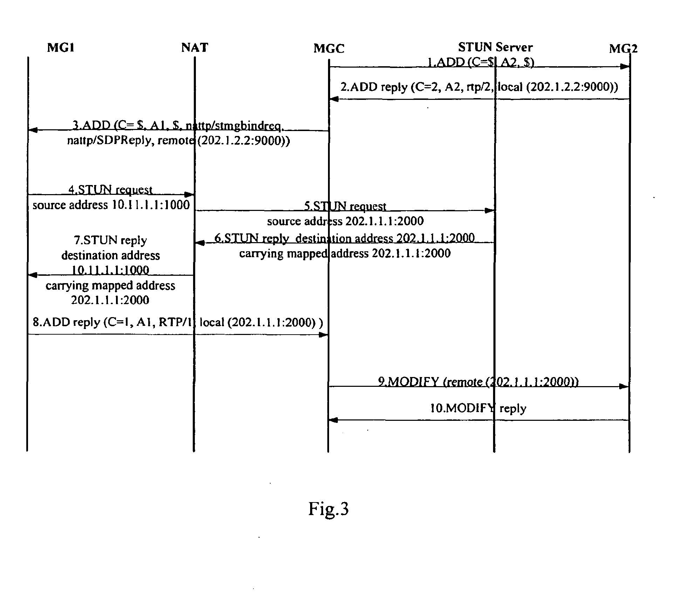

Figure 2 is a flow diagram illustrating address negotiation through STUN when the calling-side MG is located in a private network, according to an embodiment of the present invention. In the present embodiment, MG1 is the calling-side MG and located in a private network; and MG2 is the called-side MG and located in a public network. In fact, no device at the public network side is used for the extended H.248/MGCP packets and the SDP extension involved in the present invention, and the called side may be a SIP terminal, an H323 terminal, an MG, another CS domain or packet network, or the like. For the flows illustrated in Figures 3, 4, 5, and 7, the device in the public network is not limited to an MG, i.e. another device cited above may be used at the public network side instead of an MG. Such a device does not need to be aware of that the MG in the private network has mapped a local private network address for NAT traversal, as if the peer were also located in the public network.

Step 1: According to the H.248 protocol, the MGC sends to MG1 a request for adding endpoints for the calling side, in which the context identifier (contextid) is CHOOSE, and the added endpoints are A1 and an RTP endpoint. Also, the MGC specifies in the request that a nattp/ stmgbindreq attribute having a value of STUNNOSHARE and a nattp/addr event should be sent from the RTP endpoint, instructing MG1 to send a STUN binding request and report a mapped address carried in a STUN reply.

Step 2: MG1 returns a reply message to the MGC, in which the contextid is 1, the added RTP endpoint is RTP/1, and the local media gateway address in the SDP description is 10.11.1.1:1000.

Step 3: MG1 sends a STUN request to a NAT, containing the local address 10.11.1.1:1000 of MG 1 in the private network.

Step 4: The NAT forwards the request message to a STUN server, containing a public network address 202.1.1.1:2000 to which the local address of MG1 is mapped by the NAT.

Step 5: The STUN server returns a message in response to the received request, containing the mapped address 202.1.1.1:2000 at the public network side of the NAT.

Step 6: The NAT forwards the received reply to MG1 according to the addresses 10.11.1.1:1000 and 202.1.1.1:2000 stored at the NAT itself, containing the mapped address 202.1.1.1:2000 for MG1 at the public network side of the NAT.

Steps 7-8: MG1 reports to the MGC the address returned from the STUN server through a nattp/addr event, i.e. reports to the MGC the public network address 202.1.1.1:2000 to which the local media address 10.11.1.1:1000 of MG1 is mapped by the NAT, and receives a reply from the MGC.

Step 9: According to the H.248 protocol, the MGC sends to MG2 a request for adding endpoints for the called side, in which 202.1.1.1:2000, instead of the private network address 10.11.1.1:1000 reported by MG1, is carried in the remote descriptor. In this way, a media stream from MG2 may be sent to the public network address 202.1.1.1:2000, and the NAT forwards the media stream to the actual media source address 10.11.1.1:1000 of MG1 according to the mapping stored at the NAT itself.

Step 10: MG2 returns a reply message to the MGC, in which the contextid is 2, the added RTP endpoint is RTP/2, and the local media address in the SDP description is 202.1.2.2:9000.

Steps 11-12: The MGC informs MG1 of the media address 202.1.2.2:9000 of MG2 in a remote SDP description of a modify command, and receives a reply from the MG1.

By now, the address negotiation is completed. Media streams for the current call may be exchanged between MG1 and MG2 over the channel established through STUN, i.e. either one of MG1 and MG2 may first send a media stream to the public network address 202.1.1.1:2000 mapped by the NAT and the NAT forwards the media stream to the other, avoiding the problem that a media stream must be initiated first by an endpoint in the private network.

In addition, if the type of the NAT is not Full Cone, it may be considered enabling a gateway at the called side to support the function of the STUN server. In this case, the address used by public network media is not known at Step 3. Therefore, steps 3-8 should be moved after Step 12, and the nattp/ stmgbindreq and the nattp/addr event have to be sent in the modify command at Step 11. In other words, the media address of the called side obtained by MG1 through the remote SDP description is taken as the address of the STUN server, i.e. the address of the STUN server is identical to the peer address of the media stream at MG2. After the address negotiation is completed, the MGC further needs to send a modify command to modify the value of the remote SDP description, directing the remote address to the public network address mapped by the NAT for the local address of the media stream at MG1, which is returned in the STUN reply.

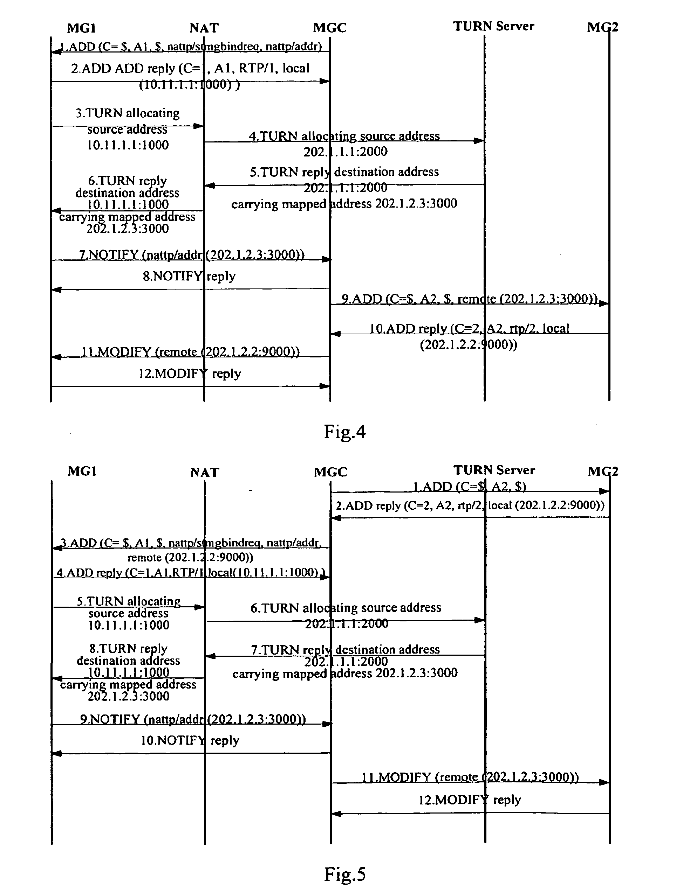

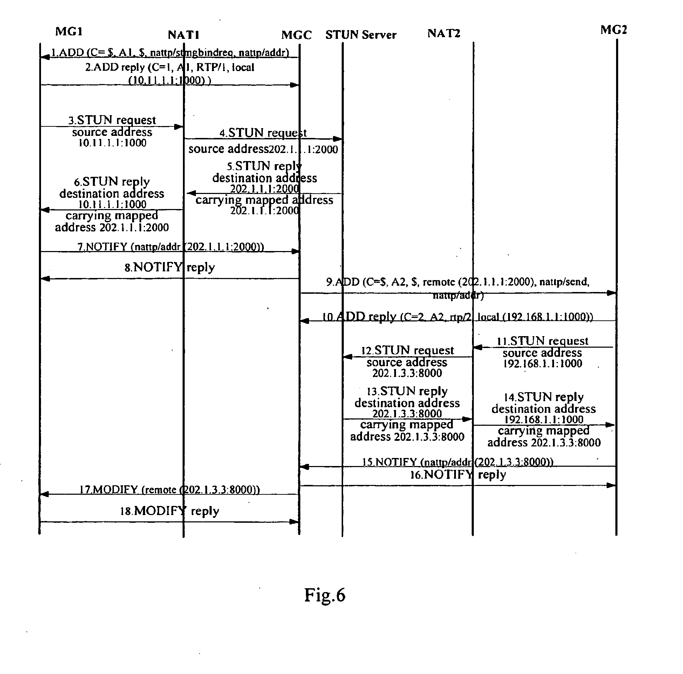

In some cases, when adding an endpoint at the calling-side MG1, the MGC does not know whether the called side is located at the same IP domain as MG 1, and may thus send the STUN request at Step 11, at which the MGC has determined that the peer of the call is located in the public network. The public network address reported by MG1 further needs to be sent as a remote address through a modify message at the side of MG2. In the flows illustrated in Figures 4 and 6, the position at which a STUN/TURN request is sent may also be moved after the added endpoint at the called side.

Of course, both the calling and called sides may obtain public network addresses through NAT traversal even when the calling and called gateways are located in the same private network domain. Obviously, this is not a better solution although media streams are connective, and may be avoided if the MGC can determines that the calling and called gateways are located in the same private network domain.

In addition, in the above flow, the mapped public network address obtained through STUN is reported through the nattp/addr event to avoid influencing the H.248 request and reply processes. In another method, steps 3-6 may be moved between Step 1 and Step 2, i.e. upon receiving an ADD request, the MG does not reply first, but obtains the NAT-mapped public network address through the STUN interaction and sends an ADD reply message, in which the mapped public network address is used or carried directly in the local SDP description. In this way, steps 7 and 8 may be omitted. A possible problem lies in that if the STUN processes take relatively much time, timeout may occur for the ADD request. This problem may be solved if the MG first sends a pending message in reply. No matter whether the STUN interaction takes place before or after the ADD replying, the H.248 call flow can proceed only when the mapped public network address is obtained. In the case that the STUN interaction takes place before the ADD replying, the setting and reporting of the nattp/addr event may be omitted.

The method in which the public network address is reported through a local SDP description in an H.248 reply message is applicable to all the examples illustrated in Figures 3 to 7. Similarly, the above flow may be implemented according to MGCP, and the method in which the public network address is reported through a local SDP description in an MGCP reply message is applicable to all the examples illustrated in Figures 2 to 7.

Figure 3 is a flow diagram illustrating address negotiation through STUN when the called-side MG is located in a private network, according to an embodiment of the present invention. In the present embodiment, MG1 is the called-side MG and located in a private network; and MG2 is the calling-side MG and located in a public network. Also in the present embodiment, the public network address is not reported through an event, but by carrying the mapped public network address in a local SDP description in an H.248 reply message.

Step 1: According to the H.248 protocol, the MGC sends to MG2 a request for adding endpoints for the calling side, in which the contextid is CHOOSE, and the added endpoints are A2 and an RTP endpoint.

Step 2: MG2 returns a reply message to the MGC, in which the contextid is 2, the added RTP endpoint is RTP/2, and the local media gateway address in the SDP description is 202.1.2.2:9000.

Step 3: According to the H.248 protocol, the MGC sends to MG1 a request for adding endpoints for the called side, in which the contextid is CHOOSE, the added endpoints are A1 and an RTP endpoint, and 202.1.2.2:9000 is carried in the remote SDP description. Also, the MGC specifies in the request that a nattp/ stmgbindreq attribute having a value of STUNNOSHARE and a nattp/SDPReply attribute having a value of YES should be sent from the RTP endpoint, instructing MG1 to send a STUN binding request and report a mapped address carried in a STUN reply message. If it is a default action to report the public network address through a local SDP description in an H.248/MGCP reply message, such attributes are not contained in the message.

Step 4: MG1 sends a STUN request to a NAT, containing the local address 10.11.1.1:1000 of MG 1 in the private network.

Step 5: The NAT forwards the request message to a STUN server, containing a public network address 202.1.1.1:2000 to which the local address of MG 1 is mapped by the NAT.

Step 6: The STUN server returns a message in response to the received request, containing the mapped address 202.1.1.1:2000 at the public network side of the NAT.

Step 7: The NAT forwards the received reply to MG1 according to the addresses 10.11.1.1:1000 and 202.1.1.1:2000 stored at the NAT itself, containing the mapped address 202.1.1.1:2000 for MG 1 at the public network side of the NAT.

Step 8: MG1 returns a reply message to the MGC, in which the contextid is 1, the added RTP endpoint is RTP/1, and the local media address in the SDP description is 202.1.1.1:2000.

Steps 9-10: The MGC informs MG2 of the media address 202.1.1.1:2000 of MG1 in a remote SDP description of a modify command, and receives a reply from MG2.

By now, the address negotiation is completed. Media streams for the current call may be exchanged between MG1 and MG2 over the channel established through STUN, i.e. MG2 may send a media stream to the public network address 202.1.1.1:2000 mapped by the NAT and the NAT forwards the media stream to the peer, avoiding the problem that a media stream must be initiated first by an endpoint in the private network.

In practical applications, the STUN server may be MG2.

Figure 4 is a flow diagram illustrating address negotiation through TURN when the calling-side MG is located in a private network, according to an embodiment of the present invention. In the present embodiment, MG1 is the calling-side MG and located in a private network; and MG2 is the called-side MG and located in a public network.

Step 1: According to the H.248 protocol, the MGC sends to MG1 a request for adding endpoints for the calling side, in which the contextid is CHOOSE, and the added endpoints are A1 and an RTP endpoint. Also, the MGC specifies in the request that a nattp/stmgbindreq attribute having a value of TURN and a nattp/addr event should be sent from the RTP endpoint, instructing MG1 to send a TURN request and report a mapped address carried in a TURN reply.

Step 2: MG1 returns a reply message to the MGC, in which the contextid is 1, the added RTP endpoint is RTP/1, and the local media gateway address in the SDP description is 10.11.1.1:1000.

Step 3: MG1 sends a TURN allocating request to a NAT, containing the local address 10.11.1.1:1000 of MG 1 in the private network.

Step 4: The NAT forwards the request message to a TURN server, containing a public network address 202.1.1.1:2000 to which the local address of MG1 is mapped by the NAT.

Step 5: The TURN server returns a message in response to the received request, containing the mapped address 202.1.2.3:3000 allocated by the TURN server for the current request.

Step 6: The NAT forwards the received reply to MG1 according to the addresses 10.11.1.1:1000 and 202.1.1.1:2000 stored at the NAT itself, containing the mapped address 202.1.2.3:3000 allocated by the TURN server for the current request.

Steps 7-8: MG1 reports to the MGC the address returned from the TURN server through a nattp/addr event, i.e. reports to the MGC the public network address 202.1.2.3:3000 allocated by the TURN server after the local media address 10.11.1.1:1000 of MG 1 is mapped by the NAT, and receives a reply from the MGC.

Step 9: According to the H.248 protocol, the MGC sends to MG2 a request for adding endpoints for the called side, in which 202.1.2.3:3000, instead of the private network address 10.11.1.1:1000 reported by MG1, is carried in the remote descriptor. In this way, a media stream from MG2 may be sent to the TURN server, and the TURN server forwards the media stream to the private network through the NAT.

Step 10: MG2 returns a reply message to the MGC, in which the contextid is 2, the added RTP endpoint is RTP/2, and the local media address in the SDP description is 202.1.2.2:9000.

Steps 11-12: The MGC informs MG1 of the media address 202.1.2.2:9000 of MG2 in a remote SDP description of a modify command, and receives a reply from the MG1.

By now, the address negotiation is completed. In this way, media sent from MG2 is sent to 202.1.2.3:3000 of the TURN server, the TURN server sends the media along the NAT mapping established through the TURN message interaction to 202.1.1.1:2000 mapped by the NAT for MG1, and the NAT forwards the media to the private network address 10.11.1.1:1000.

Figure 5 is a flow diagram illustrating address negotiation through TURN when the called-side MG is located in a private network, according to an embodiment of the present invention. In the present embodiment, MG1 is the called-side MG and located in a private network; and MG2 is the calling-side MG and located in a public network.

Step 1: According to the H.248 protocol, the MGC sends to MG2 a request for adding endpoints for the calling side, in which the contextid is CHOOSE, and the added endpoints are A2 and an RTP endpoint.

Step 2: MG2 returns a reply message to the MGC, in which the contextid is 2, the added RTP endpoint is RTP/2, and the local media gateway address in the SDP description is 202.1.2.2:9000.

Step 3: According to the H.248 protocol, the MGC sends to MG1 a request for adding endpoints for the called side, in which the contextid is CHOOSE, the added endpoints are A1 and an RTP endpoint, and 202.1.2.2:9000 is carried in the remote SDP description. Also, the MGC specifies in the request that a nattp/ stmgbindreq attribute having a value of TURN and a nattp/addr event should be sent from the RTP endpoint, instructing MG 1 to send a TURN request and report a mapped address carried in a TURN reply.

Step 4: MG1 returns a reply message to the MGC, in which the contextid is 1, the added RTP endpoint is RTP/1, and the local media gateway address in the SDP description is 10.11.1.1:1000.

Step 5: MG1 sends a TURN allocating request to a NAT, containing the local address 10.11.1.1:1000 of MG 1 in the private network.

Step 6: The NAT forwards the request message to a TURN server, containing a public network address 202.1.1.1:2000 to which the local address of MG1 is mapped by the NAT.

Step 7: The TURN server returns a message in response to the received request, containing the mapped address 202.1.2.3:3000 allocated by the TURN server for the current request.

Step 8: The NAT forwards the received reply to MG1 according to the addresses 10.11.1.1:1000 and 202.1.1.1:2000 stored at the NAT itself, containing the mapped address 202.1.2.3:3000 allocated by the TURN server for the current request.

Steps 9-10: MG1 reports to the MGC the address returned from the TURN server through a nattp/addr event, i.e. reports to the MGC the public network address 202.1.2.3:3000 allocated by the TURN server after the local media address 10.11.1.1:1000 of MG1 is mapped by the NAT, and receives a reply from the MGC.

Steps 11-12: The MGC informs MG2 of the media address 202.1.2.3:3000 allocated by the TURN server for MG1 in a remote SDP description of a modify command, and receives a reply from MG2.

Because the TURN server is required to forward media in the case of TURN, which causes a low efficiency and a high packet loss, TURN is not recommended in general and is mainly used in the case of SYMMETRIC NAT.

In all the embodiments illustrated in Figures 2 to 5, one of the two sides is located in a public network, which may be a SIP terminal, an H323 terminal, a gateway, another CS domain or IP network, or the like.

Figure 6 is a flow diagram illustrating address negotiation through STUN when the calling-side and called-side MGs each are located in a private network, according to an embodiment of the present invention. In the present embodiment, MG1 is the calling-side MG and located in a private network; and MG2 is the called-side MG and located in a different private network from MG1.

Step 1: According to the H.248 protocol, the MGC sends to MG1 a request for adding endpoints for the calling side, in which the context identifier (contextid) is CHOOSE, and the added endpoints are A1 and an RTP endpoint. Also, the MGC specifies in the request that a nattp/ stmgbindreq attribute having a value of STUNNOSHARE and a nattp/addr event should be sent from the RTP endpoint, instructing MG1 to send a STUN binding request and report a mapped address carried in a STUN reply.

Step 2: MG1 returns a reply message to the MGC, in which the contextid is 1, the added RTP endpoint is RTP/1, and the local media gateway address in the SDP description is 10.11.1.1:1000.

Step 3: MG1 sends a STUN request to a NAT, containing the local address 10.11.1.1:1000 of MG 1 in the private network.

Step 4: The NAT forwards the request message to a STUN server, containing a public network address 202.1.1.1:2000 to which the local address of MG1 is mapped by the NAT.

Step 5: The STUN server returns a message in response to the received request, containing the mapped address 202.1.1.1:2000 at the public network side of the NAT.

Step 6: The NAT forwards the received reply to MG1 according to the addresses 10.11.1.1:1000 and 202.1.1.1:2000 stored at the NAT itself, containing the mapped address 202.1.1.1:2000 for MG1 at the public network side of the NAT.

Steps 7-8: MG1 reports to the MGC the address returned from the STUN server through a nattp/addr event, i.e. reports to the MGC the public network address 202.1.1.1:2000 to which the local media address 10.11.1.1:1000 of MG1 is mapped by the NAT, and receives a reply from the MGC.

Step 9: According to the H.248 protocol, the MGC sends to MG2 a request for adding endpoints for the called side, in which the context identifier (contextid) is CHOOSE, the added endpoints are A2 and an RTP endpoint, and 202.1.1.1:2000 is carried in the remote SDP description. Also, the MGC specifies in the request that a nattp/ stmgbindreq attribute having a value of STUNNOSHARE and a nattp/addr event should be sent from the RTP endpoint, instructing MG2 to send a STUN binding request and report a mapped address carried in a STUN reply.

Step 10: MG2 returns a reply message to the MGC, in which the contextid is 2, the added RTP endpoint is RTP/2, and the local media address in the SDP description is 192.168.1.1:1000.

Step 11: MG2 sends a STUN request to the NAT, containing the local address 192.168.1.1:1000 of MG2 in the private network.

Step 12: The NAT forwards the request message to the STUN server, containing a public network address 202.1.3.3:8000 to which the local address of MG2 is mapped by the NAT.

Step 13: The STUN server returns a message in response to the received request, containing the mapped address 202.1.3.3:8000 at the public network side of the NAT.

Step 14: The NAT forwards the received reply to MG2 according to the addresses 192.168.1.1:1000 and 202.1.3.3:8000 stored at the NAT itself, containing the mapped address 202.1.3.3:8000 for MG2 at the public network side of the NAT.

Steps 15-16: MG2 reports to the MGC the address returned from the STUN server through a nattp/addr event, i.e. reports to the MGC the public network address 202.1.3.3:8000 to which the local media address 192.168.1.1:1000 of MG2 is mapped by the NAT, and receives a reply from the MGC.

Steps 17-18: The MGC informs MG1 of the media address 202.1.3.3:8000 of MG2 in a remote SDP description of a modify command, and receives a reply from the MG1.

By now, the address negotiation is completed. Media streams for the current call may be exchanged between MG1 and MG2 over the channel established through STUN, i.e. one of MG1 and MG2 may direct the destination address of a media stream to the public network address to which the local address of the other is mapped by the NAT and the NAT forwards the media stream to the other, avoiding the problem that a media stream must be initiated first by an endpoint in the private network.

In the embodiment illustrated in Figure 6, the traversal protocol messages used by MG1 and MG2 may be the same and may also be different. For example, when MG1 uses a STUN traversal protocol message, MG2 may uses a STUN traversal protocol message, an RSIP traversal protocol message, or the like.

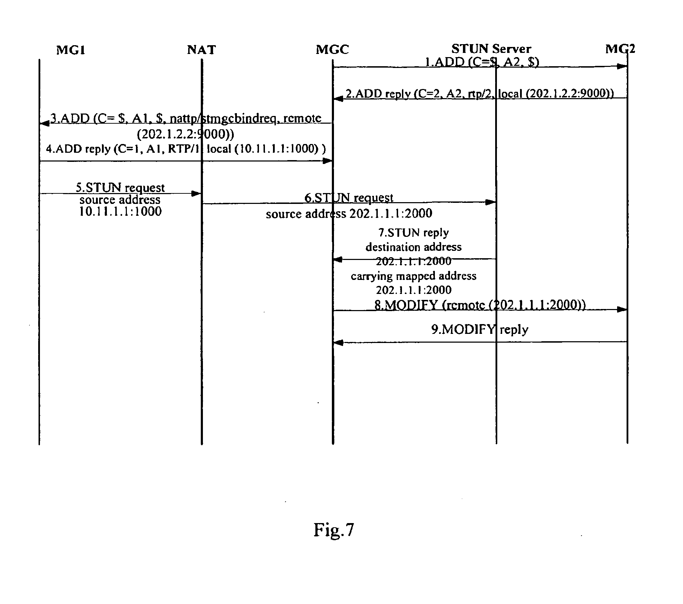

Figure 7 is a flow diagram illustrating a process that the STUN server sends to the MGC a reply to a STUN binding request message, according to an embodiment of the present invention. In the present embodiment, MG1 is the called-side MG and located in a private network; and MG2 is the calling-side MG and located in a public network. In the present embodiment, the MGC instructs the MG to send a STUN binding request, the destination address of which is, however, the address of the MGC, and the MGC obtains and sends a public network address to the peer.

Step 1: According to the H.248 protocol, the MGC sends to MG2 a request for adding endpoints for the calling side, in which the contextid is CHOOSE, and the added endpoints are A2 and an RTP endpoint.

Step 2: MG2 returns a reply message to the MGC, in which the contextid is 2, the added RTP endpoint is RTP/2, and the local media gateway address in the SDP description is 202.1.2.2:9000.

Step 3: According to the H.248 protocol, the MGC sends to MG1 a request for adding endpoints for the called side, in which the contextid is CHOOSE, the added endpoints are A1 and an RTP endpoint, and 202.1.2.2:9000 is carried in the remote SDP description. Also, the MGC specifies in the request that a nattp/ stmgcbindreq signal should be sent from the RTP endpoint, instructing MG1 to send a STUN binding request, and indicates in the Brmess parameter of the signal that the destination address carried in RESPONSE-ADDRESS is specified as the address of the MGC.

Step 4: MG1 returns a reply message to the MGC, in which the contextid is 1, the added RTP endpoint is RTP/1, and the local media gateway address in the SDP description is 10.11.1.1:1000.

Step 5: MG1 sends a STUN request to a NAT, containing the local address 10.11.1.1:1000 of MG 1 in the private network.

Step 6: The NAT forwards the request message to a STUN server, containing a public network address 202.1.1.1:2000 to which the local address of MG 1 is mapped by the NAT.

Step 7: The STUN server returns to the MGC a message in response to the received request, containing the mapped address 202.1.1.1:2000 at the public network side of the NAT.

Steps 8-9: The MGC informs MG2 of the media address 202.1.1.1:2000 of MG 1 in a remote SDP description of a modify command, and receives a reply from MG2.

By now, the address negotiation is completed. Media streams for the current call may be exchanged between MG1 and MG2 over the channel established through STUN, i.e. MG2 may send a media stream to the public network address 202.1.1.1:2000 mapped by the NAT and the NAT forwards the media stream to the peer.

It can be seen that in the embodiments of the present invention, the functions of a media gateway in a private network are extended, and the peer device in a public network may be an existing SIP terminal, H323 terminal, MG, another CS domain or packet network or the like and does not require any corresponding special configuration for NAT traversal, thus being more compatible with a device in an existing network.

An embodiment of the present invention further provides a system for implementing media stream interaction, media bearer networks in which the two sides of the media stream interaction are located being IP domains, wherein at least one of the IP domains is a private network, an address of which needs to be mapped by a network translating device, the system including a media gateway controller (MGC), a media gateway (MG) in a private network and a peer that needs to exchange media streams with the MG in the private network, wherein

the MGC includes a public network address acquiring unit and a public network address sending unit;

the public network address acquiring unit is adapted to acquire a public network address corresponding to a local media address of the MG in the private network and send the public network address to the public network address sending unit, the public network address being a public network address used as a remote address of the peer of the MG; and

the public network address sending unit is adapted to send the received public network address to the peer, and

the MG in the private network includes:

a public network address reporting unit, adapted to initiate, according to an instruction from the MGC to report the public network address, a traversal protocol message, obtain the public network address used as the remote address of the peer and report a list including the public network address to the MGC; or obtain the public network address directly from information stored in the public network address reporting unit itself and report the public network address to the MGC.

The public network address acquiring unit in the MGC includes an instruction sending unit and an information acquiring unit, wherein

the instruction sending unit is adapted to send to the MG an instruction to report a public network address; or send to the MG an instruction to implement traversal with a destination address for replying being the MGC; and

the information acquiring unit is adapted to acquire the public network address from received information reported from the MG; or acquire the public network address from a received reply to the traversal protocol message.

The information acquiring unit is further adapted to acquire a private network address of the local media address of the MG from received reported information.

The instruction to report a public network address sent from the instruction sending unit in the MGC includes a traversal method identifier, and/or a destination address and port of a traversal protocol request message, and/or a source address from which a traversal protocol request message is sent, and/or whether encryption is used for a traversal protocol message, and/or whether the peer has a function of a STUN server.

The destination address and port of a traversal protocol request message includes an address and port of a STUN server, an address and port of a TURN server, and an address and port of an RSIP server.

The instruction to report a public network address sent from the instruction sending unit in the MGC further includes one or more types of the network translating device, including Full Cone, Restricted Cone, Port Restricted Cone and Symmetric.

The type of the network translating device is configured through an attribute, a signal, a signal parameter, an event parameter and a way described in an SDP description.

The instruction to report a public network address sent from the instruction sending unit in the MGC further includes an instruction as to whether the MG reports the public network address through a local SDP description in an H.248/MGCP reply message; the instruction is configured through an attribute, a signal, a signal parameter, an event parameter and a way described in an SDP description.

The instruction to report a public network address sent from the instruction sending unit in the MGC is sent through a signal, an attribute, an event, a signal parameter, an event parameter and a way described in an SDP description.

The public network address reporting unit in the MG in the private network is adapted to report the list including the public network address or the public network address directly through a local SDP description in an H.248/MGCP reply message or through a local SDP description in an H.248/MGCP reply message according to the instruction received from the MGC to report the public network address through a local SDP description in an H.248/MGCP reply message.

The network translating device is a network address translator (NAT), a network address and port translator (NAPT), or an RSIP device. The peer of the MG in the private network includes a SIP terminal, an H323 terminal, an MG, a CS domain network or a packet domain network.

An embodiment of the present invention further provides a media gateway controller including a public network address acquiring unit and a public network address sending unit, wherein

the public network address acquiring unit is adapted to acquire a public network address corresponding to a local media address of a media gateway (MG) in a private network and send the public network address to the public network address sending unit, the public network address being a public network address used as a remote address of the peer of the MG; and

the public network address sending unit is adapted to send the received public network address to the peer.

The public network address acquiring unit in the MGC includes an instruction sending unit and an information acquiring unit, wherein

the instruction sending unit is adapted to send to the MG an instruction to report a public network address, or send to the MG an instruction to implement traversal with a destination address for replying being the MGC; and

the information acquiring unit is adapted to acquire the public network address from received information reported from the MG, or acquire the public network address from a received reply to the traversal protocol message.

The information acquiring unit is further adapted to acquire a private network address of the local media address of the MG from received reported information.

The instruction to report a public network address sent from the instruction sending unit includes a traversal method identifier, and/or a destination address and port of a traversal protocol request message, and/or a source address from which a traversal protocol request message is sent, and/or whether encryption is used for a traversal protocol message, and/or whether the peer has a function of a STUN server; the destination address and port of a traversal protocol request message includes an address and port of a STUN server, an address and port of a TURN server, and an address and port of an RSIP server.

The instruction to report a public network address sent from the instruction sending unit in the MGC further includes one or more types of the network translating device, including Full Cone, Restricted Cone, Port Restricted Cone and Symmetric; the type of the network translating device is configured through an attribute, a signal, a signal parameter, an event parameter and a way described in an SDP description.

The instruction to report a public network address sent from the instruction sending unit in the MGC further includes an instruction as to whether the MG reports the public network address through a local SDP description in an H.248/MGCP reply message; the instruction is configured through an attribute, a signal, a signal parameter, an event parameter and a way described in an SDP description.

The instruction to report a public network address sent from the instruction sending unit in the MGC is sent through a signal, an attribute, an event, a signal parameter, an event parameter and a way described in an SDP description.

An embodiment of the present invention further provides a media gateway, including:

a public network address reporting unit, adapted to initiate, according to an instruction from a media gateway controller (MGC) to report a public network address, a traversal protocol message, obtain a public network address used as a remote address of an peer and report a list including the public network address to the MGC, or obtain the public network address directly from information stored in the public network address reporting unit itself and report the public network address to the MGC.

The public network address reporting unit in the MG is adapted to report the list including the public network address or the public network address directly through a local SDP description in an H.248/MGCP reply message or through a local SDP description in an H.248/MGCP reply message according to the instruction received from the MGC to report the public network address through a local SDP description in an H.248/MGCP reply message.

The present invention has been illustrated and described with reference to some preferred embodiments thereof and is not limited thereto. Various variations, equivalent substitutions and modifications can be made without departing from the scope of the present invention defined by the claims.

## Claims

1. A method for implementing media stream interaction, wherein media bearer networks in which the two sides of the media stream interaction are located being Internet Protocol, IP, domains, wherein at least one of the IP domains is a private network, an address of which needs to be mapped by a network translating device, and wherein the method comprises:
acquiring, by a media gateway controller, MGC, which implements control of resources born on a media gateway, MG, (MG1), a public network address corresponding to a local media address of the MG in a private network, the public network address being used as a public network address of a remote address by a peer of the MG; and
sending, by the MGC, the public network address to the peer so that the peer exchanges media streams with the MG in the private network according to the public network address.

2. The method according to claim 1, wherein the process of acquiring, by the MGC, the public network address corresponding to the local media address of the MG in the private network comprises:
sending, by the MGC, to the MG an instruction to report a public network address; reporting, by the MG, a public network address used as a remote address of the peer, according to the received instruction, and obtaining, by the MGC, the public network address from received reported information; or
upon receiving from the MGC an instruction to implement traversal with a destination address for replying being the MGC, initiating, by the MG, a traversal protocol message to a STUN server which comprises information specifying that a reply message of the traversal protocol message should be sent to the MGC, and obtaining, by the MGC, the public network address from the reply message of the traversal protocol message; or
initiating, by the MG on its own initiative, a traversal protocol message which comprises information specifying that a reply message of the traversal protocol message should be sent to the MGC, and obtaining, by the MGC, the public network address from the reply message of the traversal protocol message; or
initiating, by the MG on its own initiative, a traversal protocol message and reports a public network address used as a remote address of the peer and obtained from the reply and obtaining, by the MGC, the public network address from received reported information.

3. The method according to claim 2, wherein the process of reporting, by the MG, the public network address which used as the remote address of the peer, according to the instruction to report a public network address received from the MGC comprises:
initiating, by the MG, a traversal protocol message; obtaining the public network address which used as the remote address of the peer; reporting a list comprising the public network address to the MGC; and obtaining, by the MGC, the public network address from the received list comprising the public network address; or
obtaining, by the MG, the public network address from information stored at the MG itself and reporting the public network address to the MGC.

4. The method according to claim 3, wherein the list comprising the public network address comprises at least one group of public network addresses; and
when the list comprising the public network address comprises more than one group of public network addresses, the local media address comprises multiple local private network addresses, and/or the public network addresses are obtained by the MG through a same traversal method or different traversal methods, and one private network media address corresponds to one or more public network addresses.

5. The method according to claim 4, further comprising: upon receiving the list comprising the public network address, selecting, by the MGC, at least one public network address from the list comprising the public network address for the media stream interaction, and sending the selected public network address to the peer.

6. The method according to claim 2, wherein the instruction to report a public network address sent from the MGC comprises at least one of the followings: a traversal method identifier, a destination address and port of a traversal protocol request message, a source address from which a traversal protocol request message is sent, whether encryption is used for a traversal protocol message, and whether the peer has a function of a Simple Traversal of UDP through NAT, STUN, server; and
wherein the destination address and port of a traversal protocol request message comprises: an address and port of a STUN server, an address and port of a Traversal Using Relay NAT, TURN, server, and an address and port of a Realm Specific IP, RSIP, server.

7. The method according to claim 3, wherein the instruction to report a public network address sent from the MGC comprises a traversal method identifier; and
the process of sending a traversal protocol message by the MG in the private network comprises: sending a traversal protocol message through selecting a traversal method identified by the traversal method identifier.

8. The method according to claim 3, wherein the instruction to report a public network address sent from the MGC comprises at least two traversal method identifiers; and
the process of sending a traversal protocol message by the MG in the private network comprises: sending at least one traversal protocol message according to a strategy of the MG itself, and selecting one or more traversal methods in the instruction to report a public network address as a current traversal method according to a received reply.

9. The method according to claim 8, wherein if one local private network media address of the MG is mapped to more than one public network address and the MG reports these public network addresses, the MGC selects one or more from the public network addresses for sending to the peer.

10. The method according to claim 2, wherein the traversal protocol message initiated by the MG upon receiving from the MGC the instruction to implement traversal with a destination address for replying being the MGC is a STUN binding request message which specifies that a STUN server should send a reply message to the specified address of the MGC.

11. The method according to claim 1, further comprising:
instructing, by the MGC, the MG to perform connectivity checks; wherein the connectivity checks are performed by sending a STUN binding request message.

12. The method according to claim 1, further comprising:
instructing, by the MGC, the MG to report a NAT or NAPT binding lifetime, and/or detect a NAT or NAPT binding lifetime.

13. A system for implementing media stream interaction, wherein media bearer networks in which the two sides of the media stream interaction are located being IP domains, wherein at least one of the IP domains is a private network, an address of which needs to be mapped by a network translating device, the system comprising a media gateway controller, MGC, a media gateway, MG, (MG1), in a private network and a peer that needs to exchange media streams with the MG in the private network, wherein
the MGC comprises a public network address acquiring unit and a public network address sending unit,
the public network address acquiring unit is adapted to acquire a public network address corresponding to a local media address of the MG in the private network and send the public network address to the public network address sending unit, the public network address being a public network address used as a remote address by the peer of the MG; and
the public network address sending unit is adapted to send the received public network address to the peer, and
the MG in the private network comprises:
a public network address reporting unit, adapted to initiate, according to an instruction from the MGC to report the public network address, a traversal protocol message, obtain the public network address used as the remote address by the peer and report a list comprising the public network address to the MGC; or obtain the public network address from information stored in the public network address reporting unit itself and report the public network address to the MGC;
wherein the MGC is capable of implementing control of resources born on the MG.

14. The system according to claim 13, wherein the public network address acquiring unit in the MGC comprises an instruction sending unit and an information acquiring unit, wherein
the instruction sending unit is adapted to send to the MG an instruction to report a public network address, or send to the MG an instruction to implement traversal with a destination address for replying being the MGC; and
the information acquiring unit is adapted to acquire the public network address from received information reported from the MG, or acquire the public network address from a received reply to the traversal protocol message.

15. The system according to claim 14, wherein the instruction to report a public network address sent from the instruction sending unit in the MGC comprises at least one of the followings: a traversal method identifier, a destination address and port of a traversal protocol request message, a source address from which a traversal protocol request message is sent, whether encryption is used for a traversal protocol message, and whether the peer has a function of a STUN server; and
wherein the destination address and port of a traversal protocol request message comprises an address and port of a STUN server, an address and port of a TURN server, and an address and port of an RSIP server.

16. A media gateway controller, comprising a public network address acquiring unit and a public network address sending unit, wherein
the public network address acquiring unit is adapted to acquire a public network address corresponding to a local media address of a media gateway, MG, (MG1), in a private network and send the public network address to the public network address sending unit, the public network address being a public network address used as a remote address by a peer of the MG; and
the public network address sending unit is adapted to send the received public network address to the peer;
wherein the media gateway controller is adapted to implement control of resources born on the MG.

17. The media gateway controller according to claim 16, wherein the public network address acquiring unit in the media gateway controller comprises an instruction sending unit and an information acquiring unit, wherein
the instruction sending unit is adapted to send to the MG an instruction to report a public network address, or send to the MG an instruction to initiate a traversal protocol message to a STUN server which comprises information specifying that a reply message of the traversal protocol message should be sent to the MGC; and
the information acquiring unit is adapted to acquire the public network address from received information reported from the MG. or acquire the public network address from a reply message of the traversal protocol message.

18. A media gateway (MG1), comprising
a public network address reporting unit, adapted to initiate, according to an instruction from a media gateway controller, MGC, to report a public network address, a traversal protocol message, obtain a public network address used as a remote address by a peer and report a list comprising the public network address to the MGC; or obtain the public network address from information stored in the public network address reporting unit itself and report the public network address to the MGC;
wherein the media gateway is configured to have its ressources controled by the MGC.

19. The media gateway according to claim 18, wherein the public network address reporting unit in the media gateway is adapted to report the list comprising the public network address or the public network address through a local SDP description in an H.248/MGCP reply message or through a local SDP description in an H.248/MGCP reply message according to the instruction from the MGC to report the public network address through a local SDP description in an H.248/MGCP reply message.

## Patentansprüche

1. Verfahren zum Implementieren einer Medienstrom-Wechselwirkung, wobei Medienträger-Netze, in denen sich die zwei Seiten der Medienstrom-Wechselwirkung befinden, Internetprotokoll-Domains, IP-Domains, sind, wobei wenigstens eine der IP-Domains ein privates Netz ist, von dem eine Adresse durch eine Netzumsetzungsvorrichtung abgebildet werden muss, wobei das Verfahren Folgendes umfasst:
Erfassen durch eine Medien-Gateway-Steuereinrichtung, MGC, die eine Steuerung von in einem Medien-Gateway, MG, (MG1) getragenen Betriebsmitteln implementiert, einer öffentlichen Netzadresse, die einer lokalen Medienadresse des MG in einem privaten Netz entspricht, wobei die öffentliche Netzadresse durch einen Peer des MG als eine öffentliche Netzadresse einer Fernadresse verwendet wird; und Senden der öffentlichen Netzadresse durch die MGC an den Peer, so dass der Peer Medienströme in Übereinstimmung mit der öffentlichen Netzadresse mit dem MG in dem privaten Netz austauscht.

2. Verfahren nach Anspruch 1, wobei der Prozess des Erfassens durch die MGC der öffentlichen Netzadresse, die der lokalen Medienadresse des MG in dem privaten Netz entspricht, Folgendes umfasst:
Senden eines Befehls, eine öffentliche Netzadresse zu melden, durch die MGC an das MG; Melden einer öffentlichen Netzadresse, die als eine Fernadresse des Peers verwendet wird, in Übereinstimmung mit dem empfangenen Befehl durch das MG und Erhalten der öffentlichen Netzadresse aus empfangenen gemeldeten Informationen durch die MGC; oder
beim Empfangen eines Befehls, eine Durchquerung zu implementieren, wobei eine Zieladresse für das Antworten die MGC ist, von der MGC Einleiten einer Durchquerungsprotokollnachricht, die Informationen umfasst, die spezifizieren, dass eine Antwortnachricht auf die Durchquerungsprotokollnachricht an die MGC gesendet werden sollte, an einen STUN-Server durch das MG und Erhalten der öffentlichen Netzadresse aus der Antwortnachricht auf die Durchquerungsprotokollnachricht durch die MGC; oder
Einleiten einer Durchquerungsprotokollnachricht, die Informationen umfasst, die spezifizieren, dass eine Antwortnachricht auf die Durchquerungsprotokollnachricht an die MGC gesendet werden sollte durch das MG auf Grund seiner eigenen
Initiative, und Erhalten der öffentlichen Netzadresse aus der Antwortnachricht auf die Durchquerungsprotokollnachricht durch die MGC; oder
Einleiten einer Durchquerungsprotokollnachricht durch das MG auf Grund seiner eigenen Initiative und Melden einer öffentlichen Netzadresse, die als eine Fernadresse des Peers verwendet wird und die aus der Antwort erhalten wird, und
Erhalten der öffentlichen Netzadresse aus empfangenen gemeldeten Informationen durch die MGC.

3. Verfahren nach Anspruch 2, wobei der Prozess des Meldens der öffentlichen Netzadresse, die als die Fernadresse des Peers verwendet wird, in Übereinstimmung mit dem von der MGC empfangenen Befehl, eine öffentliche Netzadresse zu melden, durch das MG Folgendes umfasst:
Einleiten einer Durchquerungsprotokollnachricht durch das MG; Erhalten der öffentlichen Netzadresse, die als die Fernadresse des Peers verwendet wird; Melden einer Liste, die die öffentliche Netzadresse umfasst, an die MGC; und Erhalten der öffentlichen Netzadresse aus der empfangenen Liste, die die öffentliche Netzadresse umfasst, durch die MGC; oder
Erhalten der öffentlichen Netzadresse aus den Informationen, die in dem MG selbst enthalten sind, und Melden der öffentlichen Netzadresse an die MGC durch das MG.

4. Verfahren nach Anspruch 3, wobei die Liste, die die öffentliche Netzadresse umfasst, wenigstens eine Gruppe von öffentlichen Netzadressen umfasst; wobei wenn die Liste, die die öffentliche Netzadresse umfasst, mehr als eine Gruppe von öffentlichen Netzadressen umfasst, die lokale Medienadresse mehrere lokale Adressen des privaten Netzes umfasst und/oder die öffentlichen Netzadressen durch das MG durch ein gleiches Durchquerungsverfahren oder verschiedene Durchquerungsverfahren erhalten werden und eine Medienadresse des privaten Netzes einer oder mehreren öffentlichen Netzadressen entspricht.

5. Verfahren nach Anspruch 4, das ferner Folgendes umfasst: beim Empfangen der Liste, die die öffentliche Netzadresse umfasst, Auswählen durch die MGC wenigstens einer öffentlichen Netzadresse aus der Liste, die die öffentliche Netzadresse umfasst, für die Medienstrom-Wechselwirkung und Senden der ausgewählten öffentlichen Netzadresse an den Peer.

6. Verfahren nach Anspruch 2, wobei der von der MGC gesendete Befehl, eine öffentliche Netzadresse zu melden, wenigstens eines der Folgenden umfasst: einen Durchquerungsverfahren-Identifizierer, eine Zieladresse und einen Ziel-Port einer Durchquexungspxotokoll-Anforderungsnachricht, eine Quelladresse, von der eine Durchquerungsprotokoll-Anforderungsnachricht gesendet wird, ob für eine Durchquerungsprotokollnachricht eine Verschlüsselung verwendet wird und ob der Peer eine Funktion eines Einfachdurchquerung-des-UDP-durch-NAT-Servers, STUN-Servers, besitzt; und
wobei die Zieladresse und der Ziel-Port einer Durchquerungsprotokoll-Anforderungsnachricht Folgendes umfassen: eine Adresse und einen Port eines STUN-Servers, eine Adresse und einen Port eines Durchquerung-unter-Verwendungeines-Relais-NAT-Servers, TURN-Servers, und eine Adresse und einen Port eines Servers mit bereichsspezifischem IP, RSIP-Servers.

7. Verfahren nach Anspruch 3, wobei der von der MGC gesendete Befehl, eine öffentliche Netzadresse zu melden, einen Durchquerungsverfahren-Identifizierer umfasst; und
der Prozess des Sendens einer Durchquerungsprotokollnachricht durch das MG in dem privaten Netz Folgendes umfasst: Senden einer Durchquerungsprotokollnachricht durch das Auswählen eines durch den Durchquerungsverfahren-Identifizierer identifizierten Durchquerungsverfahrens.

8. Verfahren nach Anspruch 3, wobei der von der MGC gesendete Befehl, eine öffentliche Netzadresse zu melden, wenigstens zwei Durchquerungsverfahren-Identifizierer umfasst; und
der Prozess des Sendens einer Durchquerungsprotokollnachricht durch das MG in dem privaten Netz Folgendes umfasst: Senden wenigstens einer Durchquerungsprotokollnachricht in Übereinstimmung mit einer Strategie des MG selbst und Auswählen eines oder mehrerer Durchquerungsverfahren in dem Befehl, um eine öffentliche Netzadresse in Übereinstimmung mit einer empfangenen Antwort als ein momentanes Durchquerungsverfahren zu melden.

9. Verfahren nach Anspruch 8, wobei, falls eine lokale Medienadresse des privaten Netzes des MG auf mehr als eine öffentliche Netzadresse abgebildet wird und das MG diese öffentlichen Netzadressen meldet, die MGC eine oder mehrere aus den öffentlichen Netzadressen für das Senden an den Peer auswählt.

10. Verfahren nach Anspruch 2, wobei die durch das MG beim Empfangen des Befehls, eine Durchquerung zu implementieren, wobei eine Zieladresse für das Antworten die MGC ist, von der MGC eingeleitete Durchquerungsprotokollnachricht eine STUN-Bindungsanforderungsnachricht ist, die spezifiziert, dass ein STUN-Server eine Antwortnachricht an die spezifizierte Adresse der MGC senden sollte.

11. Verfahren nach Anspruch 1, das ferner Folgendes umfasst:
Befehlen dem MG durch die MGC, Verbindbarkeitsprüfungen auszuführen; wobei die Verbindbaikeitsprüfungen durch das Senden einer STUN-Bindungsanforderungsnachricht ausgeführt werden.

12. Verfahren nach Anspruch 1, das ferner Folgendes umfasst:
Befehlen dem MG durch die MGC, eine NAT- oder NAPT-Bindungslebensdauer zu melden und/oder eine NAT- oder NAPT-Bindungslebensdauer zu detektieren.

13. System zum Implementieren einer Medienstrom-Wechselwirkung, wobei Medienträger-Netze, in denen sich die zwei Seiten der Medienstrom-Wechselwirkung befinden, IP-Domains sind, wobei wenigstens eine der IP-Domains ein privates Netz ist, von dem eine Adresse durch eine Netzumsetzungsvorrichtung abgebildet werden muss, wobei das System eine Medien-Gateway-Steuereinrichtung, MGC, ein Medien-Gateway, MG, (MG1) in einem privaten Netz und einen Peer, der Medienströme mit dem MG in dem privaten Netz austauschen muss, umfasst, wobei die MGC eine Einheit zum Erfassen öffentlicher Netzadressen und eine Einheit zum Senden öffentlicher Netzadressen umfasst,
die Einheit zum Erfassen öffentlicher Netzadressen dafür ausgelegt ist, eine öffentliche Netzadresse, die einer lokalen Medienadresse des MG in dem privaten Netz entspricht, zu erfassen und die öffentliche Netzadresse an die Einheit zum Senden öffentlicher Netzadressen zu senden, wobei die öffentliche Netzadresse eine öffentliche Netzadresse ist, die durch den Peer des MG als eine Fernadresse verwendet wird; und
die Einheit zum Senden öffentlicher Netzadressen dafür ausgelegt ist, die empfangene öffentliche Netzadresse an den Peer zu senden, und
das MG in dem privaten Netz Folgendes umfasst:
eine Einheit zum Melden öffentlicher Netzadressen, die dafür ausgelegt ist, in Übereinstimmung mit einem Befehl von der MGC, die öffentliche Netzadresse zu melden, eine Durchquerungsprotokollnachricht einzuleiten, die durch den Peer als die Fernadresse verwendete öffentliche Netzadresse zu erhalten und eine Liste, die die öffentliche Netzadresse umfasst, an die MGC zu melden; oder die öffentliche Netzadresse aus Informationen, die in der Einheit zum Melden öffentlicher Netzadressen selbst gespeichert sind, zu erhalten und die öffentliche Netzadresse an die MGC zu melden;
wobei die MGC eine Steuerung von in dem MG getragenen Betriebsmitteln implementieren kann.

14. System nach Anspruch 13, wobei die Einheit zum Erfassen öffentlicher Netzadressen in der MGC eine Befehlssendeeinheit und eine Informationserfassungseinheit umfasst, wobei
die Befehlssendeeinheit dafür ausgelegt ist, einen Befehl, eine öffentliche Netzadresse zu melden, an das MG zu senden oder einen Befehl, eine Durchquerung zu implementieren, wobei eine Zieladresse für das Antworten die MGC ist, an das MG zu senden; und
die Informationserfassungseinheit dafür ausgelegt ist, die öffentliche Netzadresse aus von dem MG gemeldeten empfangenen Informationen zu erfassen oder die öffentliche Netzadresse aus einer empfangenen Antwort auf die Durchquerungsprotokollnachricht zu erfassen.

15. System nach Anspruch 14, wobei der von der Befehlssendeeinheit in der MGC gesendete Befehl, eine öffentliche Netzadresse zu melden, wenigstens eines der Folgenden umfasst: einen Durchquerungsverfahren-Identifizierer, eine Zieladresse und einen Ziel-Port einer Durchquerungsprotokoll-Anforderungsnachricht, eine Quelladresse, von der eine Durchquerungsprotokoll-Anforderungsnachricht gesendet wird, ob für eine Durchquerungsprotokollnachricht eine Verschlüsselung verwendet wird und ob der Peer eine Funktion eines STUN-Servers besitzt; und
wobei die Zieladresse und der Ziel-Port einer Durchquerungsprotokoll-Anforderungsnachricht eine Adresse und einen Port eines STUN-Servers, eine Adresse und einen Port eines TURN-Servers und eine Adresse und einen Port eines RSIP-Servers umfassen.

16. Medien-Gateway-Steuereinrichtung, die eine Einheit zum Erfassen öffentlicher Netzadressen und eine Einheit zum Senden öffentlicher Netzadressen umfasst, wobei
die Einheit zum Erfassen öffentlicher Netzadressen dafür ausgelegt ist, eine öffentliche Netzadresse, die einer lokalen Medienadresse eines Medien-Gateways, MG, (MG1) in einem privaten Netz entspricht, zu erfassen und die öffentliche Netzadresse an die Einheit zum Senden öffentlicher Netzadressen zu senden, wobei die öffentliche Netzadresse eine öffentliche Netzadresse ist, die durch einen Peer des MG als eine Fernadresse verwendet wird; und
die Einheit zum Senden öffentlicher Netzadressen dafür ausgelegt ist, die empfangende öffentliche Netzadresse an den Peer zu senden,
wobei die Medien-Gateway-Steuereinrichtung dafür ausgelegt ist, eine Steuerung von in dem MG getragenen Betriebsmitteln zu implementieren.

17. Medien-Gateway-Steuereinrichtung nach Anspruch 16, wobei die Einheit zum Erfassen öffentlicher Netzadressen in der Medien-Gateway-Steuereinrichtung eine Befehlssendeeinheit und eine Informationserfassungseinheit umfasst, wobei die Befehlssendeeinheit dafür ausgelegt ist, einen Befehl, eine öffentliche Netzadresse zu melden, an das MG zu senden oder einen Befehl, eine Durchquerungsprotokollnachricht, die Informationen umfasst, die spezifizieren, dass eine Antwortnachricht auf die Durchquerungsprotokollnachricht an die MGC gesendet werden sollte, an einen STUN-Server einzuleiten, an das MG zu senden; und
die Informationserfassumgseinheit dafür ausgelegt ist, die öffentliche Netzadresse aus von der MG gemeldeten empfangenen Informationen zu erfassen oder die öffentliche Netzadresse aus einer Antwortnachricht auf die Durchquerungsprotokollnachricht zu erfassen.

18. Medien-Gateway (MG1), das Folgendes umfasst:
eine Einheit zum Melden öffentlicher Netzadressen, die dafür ausgelegt ist, in Übereinstimmung mit einem Befehl von einer Medien-Gateway-Steuereinrichtung, MGC, eine öffentliche Netzadresse zu melden, eine Durchquerungsprotokollnachricht einzuleiten, eine durch einen Peer als eine Fernadresse verwendete öffentliche Netzadresse zu erhalten und eine Liste, die die öffentliche Netzadresse umfasst, an die MGC zu melden; oder die öffentliche Netzadresse aus Informationen, die in der Einheit zum Melden öffentlicher Netzadressen selbst gespeichert sind, zu erhalten und die öffentliche Netzadresse an die MGC zu melden;
wobei das Medien-Gateway dahingehend konfiguriert ist, dass seine Betriebsmittel durch die MGC gesteuert werden.

19. Medien-Gateway nach Anspruch 18, wobei die Einheit zum Melden öffentlicher Netzadressen in dem Medien-Gateway dafür ausgelegt ist, die Liste, die die öffentliche Netzadresse umfasst, oder die öffentliche Netzadresse durch eine lokale SDP-Beschreibung in einer H.248/MGCP-Antwortnachricht oder durch eine lokale SDP-Beschreibung in einer H.248/MGCP-Antwortnachricht in Übereinstimmung mit dem Befehl von der MGC, die öffentliche Netzadresse durch eine lokale SDP-Beschreibung in einer H.248/MGCP-Antwortnachricht zu melden, zu melden.

## Revendications

1. Procédé de mise en oeuvre d'une interaction entre flux multimédia, dans lequel des réseaux de support multimédia dans lesquels se trouvent les deux côtés de l'interaction entre flux multimédia sont des domaines à Protocole Internet, IP, dans lequel au moins l'un des domaines IP est un réseau privé, dont une adresse doit être mise en correspondance par un dispositif de conversion de réseau, et dans lequel le procédé comprend :
l'acquisition, par une unité de commande de passerelle multimédia, MGC, (Media Gateway Controller), qui met en oeuvre la commande de ressources portées par une passerelle multimédia, MG (Media Gateway), (MG1), d'une adresse de réseau public correspondant à une adresse multimédia locale de la passerelle MG dans un réseau privé, l'adresse de réseau public étant utilisée en tant qu'adresse de réseau public d'une adresse distante par une homologue de la passerelle MG ; et
l'envoi, par l'unité MGC, de l'adresse de réseau public à l'homologue de manière à ce que l'homologue échange des flux multimédia avec la passerelle MG du réseau privé conformément à l'adresse de réseau public.

2. Procédé selon la revendication 1, dans lequel le procédé d'acquisition, par l'unité MGC, de l'adresse de réseau public correspondant à l'adresse multimédia locale de la passerelle MG du réseau privé, comprend :
l'envoi, par l'unité MGC, à la passerelle MG, d'une instruction demandant de signaler une adresse de réseau public ; le signalement, par la passerelle MG, d'une adresse de réseau public utilisée en tant qu'adresse distante de l'homologue, conformément à l'instruction reçue, et l'obtention, par l'unité MGC, de l'adresse de réseau public à partir des informations envoyées et reçues ; ou
lors de la réception en provenance de l'unité MGC d'une instruction demandant la mise en oeuvre d'un parcours utilisant une adresse de destination destinée à la réponse qui est celle de l'unité MGC, le déclenchement, par la passerelle MG, d'un message de protocole de parcours destiné à un serveur STUN qui comprend des informations spécifiant qu'un message de réponse au message de protocole de parcours doit être envoyé à l'unité MGC, et l'obtention, par l'unité MGC, de l'adresse de réseau public à partir du message de réponse au message de protocole de parcours ; ou
le déclenchement, par la passerelle MG à sa propre initiative, d'un message de protocole de parcours qui comprend des informations spécifiant qu'un message de réponse au message de protocole de parcours doit être envoyé à l'unité MGC, et l'obtention, par l'unité MGC, de l'adresse de réseau public à partir du message de réponse au message de protocole de parcours ; ou
le déclenchement, par la passerelle MG à sa propre initiative, d'un message de protocole de parcours et le signalement d'une adresse de réseau public utilisée en tant qu'adresse distante de l'homologue et obtenue à partir de la réponse, et l'obtention, par l'unité MGC, de l'adresse de réseau public à partir des informations signalées reçues.

3. Procédé selon la revendication 2, dans lequel le processus de signalement, par la passerelle MG, de l'adresse de réseau public utilisée en tant qu'adresse distante de l'homologue, conformément à l'instruction demandant de signaler une adresse de réseau public reçue de l'unité MGC comprend :
le déclenchement, par la passerelle MG, d'un message de protocole de parcours; l'obtention de l'adresse de réseau public utilisée en tant qu'adresse distante de l'homologue ; le signalement d'une liste comprenant l'adresse de réseau public à l'unité MGC ; et l'obtention, par l'unité MGC, de l'adresse de réseau public à partir de la liste reçue comprenant l'adresse de réseau public ; ou
l'obtention, par la passerelle MG, de l'adresse de réseau public à partir d'informations stockées sur la passerelle MG elle-même et le signalement de l'adresse de réseau public à l'unité MGC.

4. Procédé selon la revendication 3, dans lequel la liste comprenant l'adresse de réseau public comprend au moins un groupe d'adresses de réseau public ; et
lorsque la liste comprenant l'adresse de réseau public comprend plus d'un groupe d'adresses de réseau public, l'adresse multimédia locale comprend de multiples adresses de réseaux privés locaux, et/ou les adresses de réseau public sont obtenues par la passerelle MG en utilisant le même procédé de parcours ou des procédés de parcours différents, et une adresse multimédia de réseau privé correspond à une ou plusieurs adresses de réseau public.

5. Procédé selon la revendication 4, comprenant en outre :
lors de la réception de la liste comprenant l'adresse de réseau public, la sélection, par l'unité MGC, d'au moins une adresse de réseau public dans la liste comprenant l'adresse de réseau public pour l'interaction entre flux multimédia, et l'envoi de l'adresse de réseau public sélectionnée à l'homologue.

6. Procédé selon la revendication 2, dans lequel l'instruction demandant de signaler une adresse de réseau public envoyée par l'unité MGC comprend au moins l'un des éléments suivants : un identifiant de procédé de parcours, une adresse et un port de destination d'un message de demande de protocole de parcours, une adresse de source de laquelle un message de demande de protocole de parcours est envoyé, une indication selon laquelle un cryptage est ou non utilisé pour un message de protocole de parcours et une indication selon laquelle l'homologue a ou non une fonction de serveur de parcours simple en UDP par conversion NAT, ou STUN (Simple Traversal of UDP through NAT) ; et
dans lequel l'adresse et le port de destination d'un message de demande de protocole de parcours comprennent ; une adresse et un port d'un serveur STUN, une adresse et un port d'un serveur de parcours utilisant une conversion NAT relais, ou TURN (Traversal Using Relay Nat), et une adresse et un port d'un serveur IP Spécifique de Domaines, RSIP (Realm Specific IP).

7. Procédé selon la revendication 3, dans lequel l'instruction demandant de signaler une adresse de réseau public envoyée par l'unité MGC comprend un identifiant de procédé de parcours ; et
le processus d'envoi d'un message de protocole de parcours par la passerelle MG du réseau privé comprend : l'envoi d'un message de protocole de parcours par sélection d'un procédé de parcours identifié par l'identifiant de procédé de parcours.

8. Procédé selon la revendication 3, dans lequel l'instruction demandant de signaler une adresse de réseau public envoyée par l'unité MGC comprend au moins deux identifiants de procédé de parcours ; et
le processus d'envoi d'un message de protocole de parcours par la passerelle MG du réseau privé comprend : l'envoi d'au moins un message de protocole de parcours conformément à une stratégie de la passerelle MG elle-même, et la sélection d'un ou plusieurs procédés de parcours dans l'instruction demandant de signaler une adresse de réseau public en tant que procédé de parcours courant conformément à une réponse reçue.

9. Procédé selon la revendication 8, dans lequel, si une adresse multimédia de réseau local privé de la passerelle MG est mise en correspondance avec plus d'une adresse de réseau public et si la passerelle MG signale ces adresses de réseau public, l'unité
MGC en sélectionne une ou plusieurs parmi les adresses de réseau public pour l'envoi à destination de l'homologue.

10. Procédé selon la revendication 2, dans lequel le message de protocole de parcours déclenché par la passerelle MG lors de la réception en provenance de l'unité MGC de l'instruction demandant de mettre en oeuvre un parcours, une adresse de destination de la réponse étant celle de l'unité MGC, est un message de demande d'établissement de lien STUN qui spécifie qu'un serveur STUN doit envoyer un message de réponse à l'adresse spécifiée de l'unité MGC.

11. Procédé selon la revendication 1, comprenant en outre :
l'envoi, par l'unité MGC, à la passerelle MG, d'une instruction lui demandant d'effectuer des vérifications de connectivité ; les vérifications de connectivité étant effectuées en envoyant un message de demande d'établissement de lien STUN

12. Procédé selon la revendication 1, comprenant en outre :
l'envoi, par l'unité MGC, à la passerelle MG, d'une instruction demandant de signaler une durée de vie de lien NAT ou NAPT, et/ou de détecter une durée de vie de lien NAT ou NAPT.

13. Système destiné à mettre en oeuvre une interaction entre flux multimédia, dans lequel des réseaux de support multimédia dans lesquels se trouvent les deux côtés de l'interaction entre flux multimédia sont des domaines IP, dans lequel au moins l'un des domaines IP est un réseau privé, dont une adresse doit être mise en correspondance par un dispositif de conversion de réseau, le système comprenant une unité de commande de passerelle multimédia, MGC, une passerelle multimédia, MG, (MG1), dans un réseau privé et un homologue qui doit échanger des flux multimédia avec la passerelle MG du réseau privé, dans lequel
l'unité MGC comprend une unité d'acquisition d'adresse de réseau public et une unité d'envoi d'adresse de réseau public,
l'unité d'acquisition d'adresse de réseau public est apte à acquérir une adresse de réseau public correspondant à une adresse multimédia locale de la passerelle MG du réseau privé et à envoyer l'adresse de réseau public à l'unité d'envoi d'adresse de réseau public, l'adresse de réseau public étant une adresse de réseau public utilisée en tant qu'adresse distante par l'homologue de la passerelle MG ; et
l'unité d'envoi d'adresse de réseau public est apte à envoyer l'adresse de réseau public reçue à l'homologue, et
la passerelle MG du réseau privé comprend ;
une unité de signalement d'adresse de réseau public, apte à déclencher, conformément à une instruction provenant de l'unité MGC demandant de signaler l'adresse de réseau public, un message de protocole de parcours, à obtenir l'adresse de réseau public utilisée en tant qu'adresse distante par l'homologue et à signaler une liste comprenant l'adresse de réseau public à l'unité MGC ; ou à obtenir l'adresse de réseau public à partir d'informations stockées dans l'unité de signalement d'adresse de réseau public elle-même, et à signaler l'adresse de réseau public à l'unité MGC ;
dans lequel l'unité MGC est capable de mettre en oeuvre une commande de ressources portées par la passerelle MG.

14. Système selon la revendication 13, dans lequel l'unité d'acquisition d'adresse de réseau public de l'unité MGC comprend une unité d'envoi d'instruction et une unité d'acquisition d'informations, dans lequel
l'unité d'envoi d'instruction est apte à envoyer à la passerelle MG une instruction demandant de signaler une adresse de réseau public, ou à envoyer à la passerelle MG une instruction demandant de mettre en oeuvre un parcours, l'adresse de destination de la réponse étant l'unité MGC ; et
l'unité d'acquisition d'informations est apte à acquérir l'adresse de réseau public à partir d'informations reçues signalées par la passerelle MG, ou à acquérir l'adresse de réseau public à partir d'une réponse reçue au message de protocole de parcours.

15. Système selon la revendication 14, dans lequel l'instruction demandant de signaler une adresse de réseau public envoyée par l'unité d'envoi d'instruction de l'unité MGC comprend au moins l'un des éléments suivants : un identifiant de procédé de parcours, une adresse et un port de destination d'un message de demande de protocole de parcours, une adresse de source à partir de laquelle un message de demande de protocole de parcours est envoyé, une indication selon laquelle un cryptage est ou non utilisé pour un message de protocole de parcours, et une indication selon laquelle l'homologue a ou non une fonction de serveur STUN ; et
dans lequel l'adresse et le port de destination d'un message de demande de protocole de parcours comprennent une adresse et un port de serveur STUN, une adresse et un port de serveur TURN, et une adresse et un port de serveur RSIP.

16. Unité de commande de passerelle multimédia, comprenant une unité d'acquisition d'adresse de réseau public et une unité d'envoi d'adresse de réseau public, dans laquelle :
l'unité d'acquisition d'adresse de réseau public est apte à acquérir une adresse de réseau public correspondant à une adresse multimédia locale d'une passerelle multimédia, MG, (MG1), d'un réseau privé et à envoyer l'adresse de réseau public à l'unité d'envoi d'adresse de réseau public, l'adresse de réseau public étant une adresse de réseau public utilisée en tant qu'adresse distante par un homologue de la passerelle MG; et
l'unité d'envoi d'adresse de réseau public est apte à envoyer l'adresse de réseau public reçue à l'homologue ;
dans laquelle l'unité de commande de passerelle multimédia est apte à mettre en oeuvre une commande de ressources portées par la passerelle MG.

17. Unité de commande de passerelle multimédia selon la revendication 16, dans laquelle l'unité d'acquisition d'adresse de réseau public de l'unité de commande de passerelle multimédia comprend une unité d'envoi d'instruction et une unité d'acquisition d'informations, dans laquelle
l'unité d'envoi d'instruction est apte à envoyer à la passerelle MG une instruction demandant de signaler une adresse de réseau public, ou à envoyer à la passerelle MG une instruction demandant de déclencher un message de protocole de parcours destiné à un serveur STUN qui comprend des informations spécifiant qu'un message de réponse au message de protocole de parcours doit être envoyé à l'unité MGC ; et l'unité d'acquisition d'informations est apte à acquérir l'adresse de réseau public à partir d'informations reçues signalées par la passerelle MG, ou à acquérir l'adresse de réseau public à partir d'un message de réponse au message de protocole de parcours.

18. Passerelle multimédia (MG1), comprenant
une unité de signalement d'adresse de réseau public, apte à déclencher, conformément à une instruction provenant d'une unité de commande de passerelle multimédia, MGC, demandant de signaler une adresse de réseau public, un message de protocole de parcours, à obtenir une adresse de réseau public utilisée en tant qu'adresse distante par un homologue et à signaler une liste comprenant l'adresse de réseau public à l'unité MGC ; ou à obtenir l'adresse de réseau public à partir d'informations stockées dans l'unité de signalement d'adresse de réseau public elle-même et à signaler l'adresse de réseau public à l'unité MGC ;
dans laquelle la passerelle multimédia est configurée pour faire en sorte que ses ressources soient commandées par l'unité MGC.

19. Passerelle multimédia selon la revendication 18, dans laquelle l'unité de signalement d'adresse de réseau public de la passerelle multimédia est apte à signaler la liste comprenant l'adresse de réseau public ou l'adresse de réseau public par l'intermédiaire d'une description SDP locale dans un message de réponse de type H.248/MGCP ou par l'intermédiaire d'une description SDP locale dans un message de réponse de type H.248/MGCP conformément à l'instruction provenant de l'unité MGC demandant de signaler l'adresse de réseau public par l'intermédiaire d'une description SDP locale dans un message de réponse de type H.248/MGCP.
